# EUROPÄISCHE PATENTANMELDUNG

(11) **EP 0 939 046 A1**
(43) Veröffentlichungstag der Anmeldung: **01.09.1999**
(21) Anmeldenummer: 98116613.5
(22) Anmeldetag: 02.09.1998
(51) Int. Cl.: B65H 3/10, B65H 3/48

(54) **Vorrichtung und Verfahren zur Datenerfassung**

(30) Priorität: 25.02.1998 DE 19807486
(71) Anmelder: Ritsert, Karl Dr., 82362 Weilheim (DE)
(72) Erfinder: Ritsert, Karl Dr., 82362 Weilheim (DE)

(57) **Zusammenfassung**

Es wird eine Vorrichtung zur Datenerfassung bereitgestellt, die folgendes umfaßt:
eine Einrichtung, um eine Vorlage von der Unterseite eines Vorlagenstapels (4) abzuziehen, mit
   einem Vorlagendepot (3), das einen Vorlagendepotboden (30) und eine in Transportrichtung vordere Vorlagendepotbegrenzung (37) aufweist und den Vorlagenstapel (4) aufnimmt;
   einem mit Hilfe der vorderen Vorlagendepotbegrenzung (37) gebildeten Spalt (38), durch den eine zu erfassende Vorlage mit Hilfe
   einer Saugwalze (42) transportiert wird, die in bezug auf den Vorlagendepotboden (30) so angeordnet ist, daß eine Vorlage von der Unterseite des Vorlagenstapels (4) ansaugt und durch Rotation der Saugwalze (42) abgezogen werden kann;
eine Einrichtung zum Weiterleiten der mit Hilfe der Saugwalze (42) abgezogenen Vorlage;
ein aus einem oder mehreren Abschnitten (6, 22) bestehendes Transportbandsystem, auf das die Vorlage durch die Einrichtung zum Weiterleiten gelangt und das die auf einem Transportband/Transportbändern (68) liegenden Vorlagen transportiert;
eine Einrichtung zur Erfassung von Vorder- und/oder Rückseite der Vorlage (15, 17), zu der die Vorlage mit Hilfe des Transportbandsystems gebracht wird;
eine Einrichtung zur Ablage der erfaßten Vorlagen.

## Beschreibung

Die Erfindung betrifft eine Vorrichtung (Hochleistungs-Scanner-System) und ein flexibel einsetzbares Verfahren zur vollautomatischen Erfassung (Digitalisierung) von Vorlagen, wie Schriftstücken, Dokumenten, Drucksachen, Formularen, Urkunden, Fotos und Mustern, und zwar sowohl farbig als auch schwarz-weiß, mittels Digitalkameras, wobei die Vorlagen aufgenommen und in eine Transporteinrichtung überführt werden, mit deren Hilfe sie in den Aufnahmebereich einer oder mehrerer Digitalkameras gebracht werden. Die Kameras erfassen dann die Vorlage. Die in den Kameras digitalisierten Aufnahmen werden an einen Computer übertragen.

Es ist bekannt, Schriftstücke mittels Scannersystemen elektronisch zu digitalisieren. Probleme bei diesen Verfahren treten jedoch insbesondere dann auf, wenn die Vorlagen
- kontrastarm (schlecht lesbar) sind,
- mechanisch empfindlich sind (empfindlicher Druckuntergrund, z.B. Durchschreibpapier) oder
- in unterschiedlichen Formaten vorliegen (z.B. nicht einheitlich in einem bestimmten DIN-Format).

In diesen Fällen ist eine Massenbehandlung durch herkömmliches "Scannen" erheblich erschwert oder gar unmöglich. Momentan werden diese Vorlagen in der Regel mit einem Flachbett-Scannsystem manuell einzeln erfaßt. Die Durchgangsleistung solcher Systeme liegt bei ca. 4 Seiten/Minute (240 Seiten/Stunde oder ca. 1500 Seiten/Tag).

Besondere Schwierigkeiten treten ferner bei dem Versuch auf, in einem Stapel oder Stoß bereitgestellte Vorlagen maschinell sicher und zuverlässig zu vereinzeln, wenn es sich nicht um druckfrische, sondern um durch Gebrauch bereits beeinträchtigte Vorlagen handelt, wie etwa Teile von Akten.

Mit der Erfindung soll also die Aufgabe gelöst werden, Schrift- oder Bildvorlagen, insbesondere in wechselnden Formaten und/oder Vorlagendicken und/oder nach bereits erfolgtem Gebrauch schonend, aber dennoch schnell und automatisch mechanisch aufzunehmen und elektronisch zu erfassen. Dabei soll es möglich sein, die Vorlagen als Stoß oder Stapel (Vorlagenvorrat) bereitzustellen, zuverlässig zu vereinzeln und digital zu erfassen.

Die Aufgabe wird durch eine Vorrichtung und ein Verfahren gemäß der Definition in den Ansprüchen gelöst.

Der Erfindung liegt das Prinzip zugrunde, Vorlagen nach einem Verfahren zu erfassen, bei dem mittels eines Transportsystems eine zu erfassende Vorlage aufgegriffen und durch Bänder und/oder Rollen und/oder Saugwalzen an einer oder mehreren Digitalkameras vorbeigeführt wird; mindestens eine der Kameras ausgelöst wird, wenn sich die Vorlage in deren Bildaufnahmebereich befindet, ohne daß die Transportgeschwindigkeit der Vorlage bei der Aufnahme durch die Kamera wesentlich vermindert wird; und anschließend die in der Kamera digitalisierte Aufnahme der Vorlage an einen Computer übertragen wird.

Eine erfindungsgemäß geeignete Vorrichtung zur Datenerfassung umfaßt demnach ein Transportsystem, eine oder mehrere Digitalkameras und einen Computer, der mit der/den Digitalkamera(s) verbunden ist, wobei das Transportsystem so ausgelegt ist, daß eine zu erfassende Vorlage aufgriffen und durch Bänder und/oder Rollen und/oder Saugwalzen an einer oder mehreren Digitalkameras vorbeigeführt wird. Bei dem Transportsystem handelt es sich also um eine Einrichtung, mit der die Vorlagen schnell und schonend aufgegriffen und mit Hilfe von Bändern und/oder Rollen und/oder Saugtrommeln fließbandartig transportiert werden können. In einer bevorzugten Ausführungsform können Vorder- und Rückseite in einem Arbeitsvorgang erfaßt werden, ohne daß die Vorlage gedreht (gewendet) werden muß.

Erfindungsgemäß ist es bevorzugt, wenn das Aufnehmen der Vorlagen von der Unterseite eines Vorlagerstapels mit Hilfe einer Saugwalze erfolgt (Unterflursauganleger), wie nachstehend ausführlich erläutert wird. Bei einem alternativen System mit einem Obersauganleger wird eine Vorlage von einem Vorlagenstapel mit Hilfe einer Greifvorrichtung, die mit Saugnäpfen ausgestattet ist, aufgegriffen. Dabei wird Druckluft in Transportrichtung zugeführt, um die Vereinzelung der Vorlagen zu unterstützen. Nach Anheben der Vorlage durch die Greifvorrichtung gelangt das durch die Druckluft flatternde Ende der Vorlage in den Bereich einer rotierenden Trommel, die mit Löchern versehen ist, durch die Luft angesaugt wird. Die Vorlage wird durch die Rotation dieser Trommel weiter auf Förderbänder transportiert. Die Vorlage liegt auf diesen Förderbändern und wird von oben beispielsweise mit Hilfe von Rollen oder Kugeln geführt. Ein derartiges Transportbandsystem wird nachstehend noch ausführlich erläutert. Im Bereich des Transportbandsystems erfolgt dann die Erfassung (Digitalisierung) der Vorlagen.

Einzelheiten der Erfindung werden nachstehend mit Bezug auf die Zeichnungen erläutert, in denen bevorzugte Ausführungsformen der erfindungsgemäßen Vorrichtung bzw. Ausschnitte derartiger Vorrichtungen dargestellt sind. Es zeigt:
- **Figur 1**: die Seitenansicht, teilweise als Schnittdarstellung, einer bevorzugten Ausführungsform der erfindungsgemäßen Vorrichtung;
- **Figur 2**: eine Draufsicht auf das Vorlagendepot sowie einen Querschnitt durch die Einrichtung zum Abziehen einzelner Vorlagen;
- **Figur 3**: einen Querschnitt durch das Vorlagendepot entlang der Linie III-III in Fig. 2;
- **Figur 4**: die vordere Vorlagendepotbegrenzung;
- **Figur 5**: einen vergrößerten Ausschnitt von Fig. 1, der den Vorlagenaufnahmeabschnitt umfaßt;
- **Figur 6**: eine vergrößerte Draufsicht, teilweise als Schnittdarstellung, auf die Saugwalze;
- **Figur 7**: eine Draufsicht auf das Transportbandsystem mit dem Kontrollabschnitt, dem Aufnahmebereich der Digitalkameras und dem Vorlagenablageabschnitt;
- **Figur 8**: einen Querschnitt entlang der Linie VIII-VIII in Fig. 7;
- **Figur 9**: einen Querschnitt durch den Kontrollabschnitt mit den Metalldetektoren, und zwar im Betreibszusand und im aufgeklappten Zustand;
- **Figur 10**: eine Seitenansicht, teilweise als Querschnitt, der Vereinzelungskontrolle;
- **Figur 11**: einen Querschnitt entlang der Linie XI-XI in Fig. 10;
- **Figur 12**: eine vergrößerten Ausschnitt von Fig. 1, die den Aufnahmebereich der Digitalkameras umfaßt.

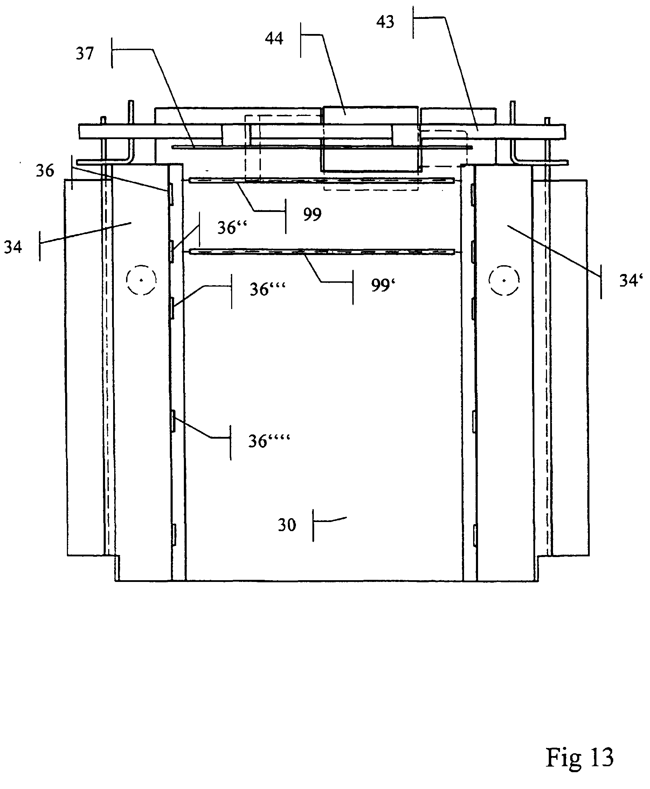

- **Figur 13**: Draufsicht auf das Vorlagendepot

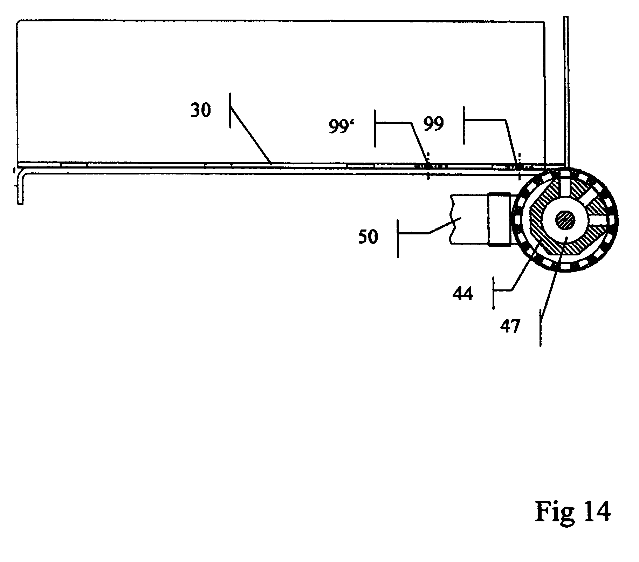

- **Figur 14**: Seitenansicht auf das Vorlagendepot

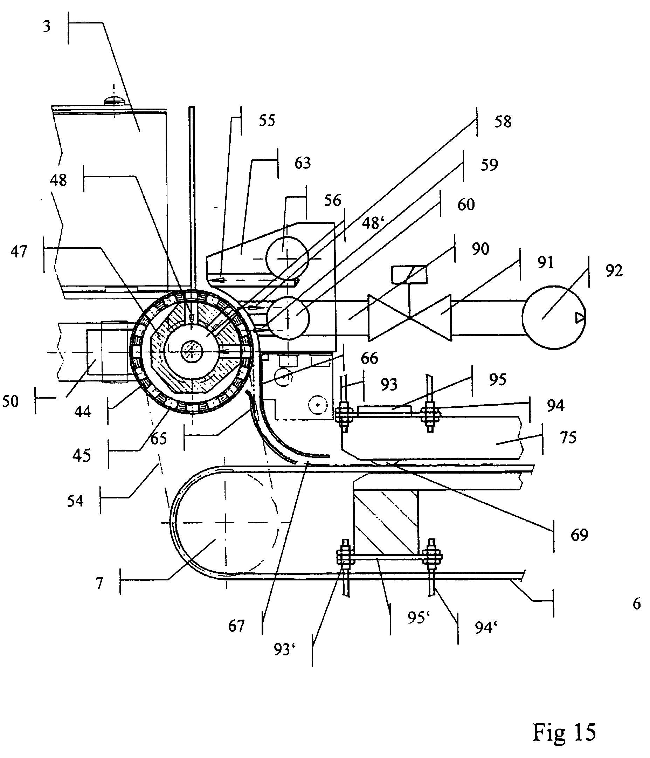

- **Figur 15**: Seitenansicht des Bereichs der Saugwalze, teilweise als Schnittdarstellung, einer bevorzugten Ausführungsform der erfindungsgemäßen Vorrichtung.

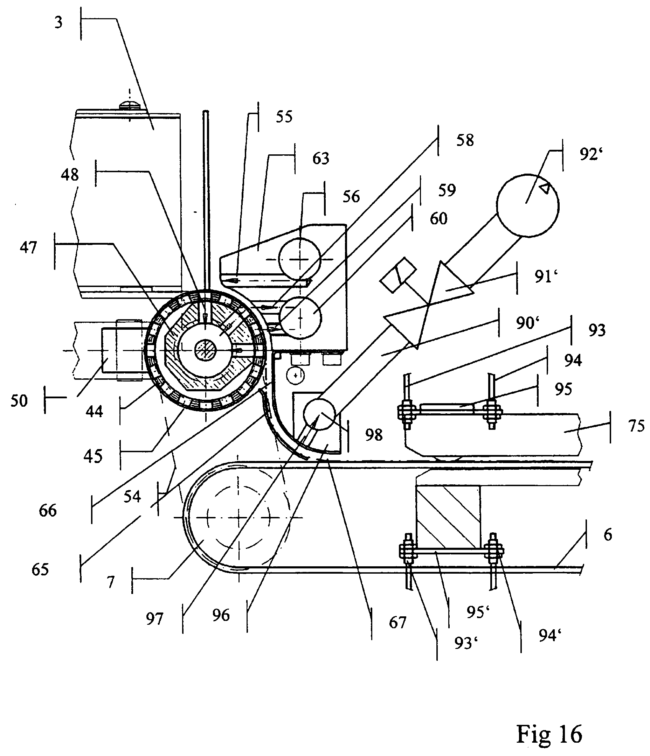

- **Figur 16**: Seitenansicht des Bereichs der Saugwalze, teilweise als Schnittdarstellung, einer alternativen Ausführungsform der erfindungsgemäßen Vorrichtung.
- **Figur 17**: Seitenansicht des Bereichs der Saugwalze, teilweise als Schnittdarstellung, einer Ausführungsform der erfindungsgemäßen Vorrichtung, in der die Ansaugvorrichtung auf der oberen Vorlagenführungsfläche untergebracht ist.

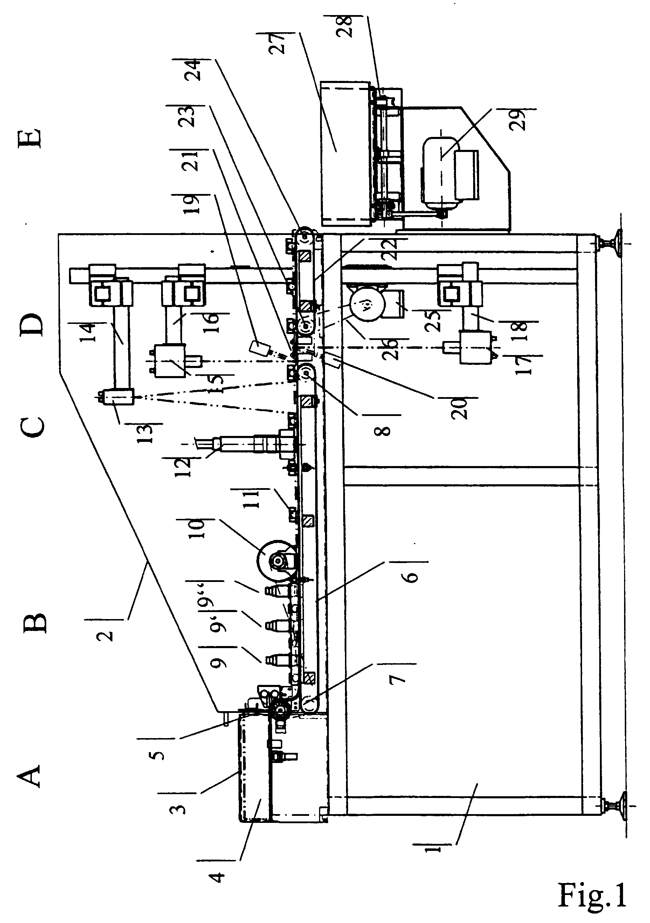

Fig. 1 zeigt eine bevorzugte Ausführungsform von der Seite, teilweise als Schnittansicht. Ein derartiges Hochleistungs-Scanner-System ist typischerweise in einem Gehäuse 1 mit den Abmessungen 1,7 * 0,7 * 1,5 m (incl. Untergestell) untergebracht. Die Vorrichtung ist zweckmäßigerweise bis auf ein Vorlagendepot 3 und einen Ablagebehälter 27 mit einer aufklappbaren Abdeckung 2 versehen. Sie umfaßt ferner ein Bedienungsmodul (z.B. Monitor mit Tastur oder Touchscreen mit Statusanzeige) (in der Fig. nicht gezeigt).

Die dargestellte Vorrichtung läßt sich in folgende fünf Abschnitte untergliedern:
A) Vorlagenaufnahmeabschnitt mit dem Vorlagendepot 3, das einen Vorlagenstapel 4 aufnimmt und in das Vorlagen (von oben) endlos nachgefüllt werden können, und einer Einrichtung 5 zum Abziehen einzelner Vorlagen und zur Übergabe der vereinzelten Vorlagen an einen ersten Abschnitt eines Bandsystems 6;
B) optionaler Kontrollabschnitt mit Metalldetektoren 9 und Vereinzelungskontrolle 10;
C) optionaler Abschnitt zum Aufbringen eines Steuer- oder Prüfcodes mit einem Drucker 12 oder zum Erfassen eines Steuer- oder Prüfcodes mit einem Lesegerät 13;
D) Digitalisierungsabschnitt mit Digitalkameras 15, 17;
E) Vorlagenablageabschnitt zum geordnetem Ablegen der Vorlagen in dem Ablagebehälter 27.

Im Innern des Gehäuses 1 können sich eine Vakuumquelle und eine Druckluftquelle (bzw. eine Einrichtung, die sowohl ein Vakuum als auch Druckluft bereitstellt), die Schaltungselektronik sowie eine Steuerung des Druckers 10, wie eines Tintenstrahldruckers (falls ein Drucker 10 vorgesehen ist), befinden (in Fig. 1 nicht gezeigt). Ferner befinden sich zweckmäßigerweise im Innern des Gehäuses 1 die untere Digitalkamera 17 (bei einer Ausführungsform, bei der auch die untere Seite einer Vorlage erfaßt werden soll) sowie ein Elektromotor 25, der über einen Antriebsriemen 26 das Transportsystem antreibt.

Bei der in Fig. 1 gezeigten Ausführungsform wird eine Vorlage von der Unterseite des Vorlagenstapels 4 im Vorlagendepot 3 mit Hilfe der Einrichtung 5 zum Abziehen einzelner Vorlagen abgezogen und an den ersten Abschnitt des Bandsystems 6 übergeben, in dem die Bandführung mit Hilfe einer vorderen Transportbandrolle 7 und einer hinteren Transportbandrolle 8 erfolgt. Die Vorlage wird dann mit Hilfe des ersten Abschnitts des Bandsystems 6 durch einen Anschnitt mit den Metalldetektoren 9 und der Vereinzelungskontrolle 10 transportiert. Bei dem Transport auf dem Band wird die Vorlage durch Vorlagenandrückeinrichtungen 11 in Kontakt mit dem Band gehalten. Nach dem Verlassen des Kontrollabschnitts wird sie mit Hilfe des ersten Abschnitts des Bandsystems 6 zu dem Drucker 12 und dann dem Lesegerät 13, das von einer Halterung 14 gehalten wird, transportiert. Anschließend wird die Vorlage in den Aufnahmebereich der oberen Digitalkamera 15, die von einer Halterung 16 gehalten wird, und dann in den Aufnahmebereich der unteren Digitalkamera 17, die von einer Halterung 18 gehalten wird, transportiert. Zur Ausleuchtung des Aufnahmebereichs der Digitalkameras 15, 17 sind eine obere Lichtquelle 19 bzw. eine untere Lichtquelle 20 vorgesehen. Im Aufnahmebereich der Digitalkameras 15, 17 wird die Vorlage von der Vorlagenführungseinrichtung 21 abgestützt. Nach der Erfassung gelangt sie auf einen zweiten Abschnitt eines Bandsystems 22, in dem die Bandführung mit Hilfe einer vorderen Transportbandrolle 23 und einer hinteren Transportbandrolle 24 erfolgt, und dann in den Ablagebehälter 27, der sich auf einem Ablagebehältertransportband 28 befindet, das von einem Elektromotor 29 angetrieben werden kann.

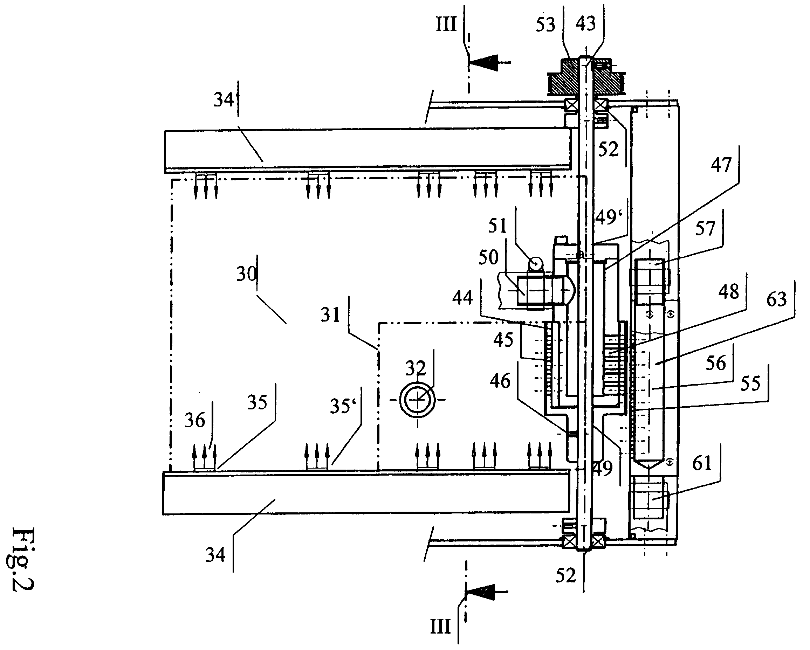

Fig. 2 zeigt den Vorlagenaufnahmeabschnitt A in einer detaillierteren Ansicht. Genauer gesagt zeigt Fig. 2 eine Draufsicht auf das Vorlagendepot 3 sowie einen Schnitt durch die Einrichtung 5 zum Abziehen einzelner Vorlagen.

Wie bereits erwähnt, umfaßt der Vorlagenaufnahmeabschnitt A das Vorlagendepot 3, das den Stapel 4 von manuell vorbereiteten Vorlagen aufnimmt. Zweckmäßigerweise werden die Vorlagen so vorbereitet, daß Vorlagen aller Formate in einer Ecke auf dem Vorlagendepotboden 30 vereint zu liegen kommen, wie dies schematisch für eine kleinformatige Vorlage 31 in Fig. 2 gezeigt ist. Dies kann mit Hilfe einer Rüttelstation (nicht gezeigt) geschehen. Vorzugsweise werden die Vorlagen so in das Vorlagendepot 3 eingebracht, daß die Längsseiten der Vorlagen parallel zur Transportrichtung liegen. Beim Betrieb der Vorrichtung wird von der Unterseite des Stapels 4 eine Vorlage abgezogen. Dies geschieht an der in bezug auf die Transportrichtung vorderen Kante des Vorlagendepots 3 mit Hilfe der Einrichtung 5 zum Abziehen einzelner Vorlagen.

Im Vorlagendepotboden 30 ist vorzugsweise ein Vorlagensensor 32, wie ein kapazitiver Sensor, vorgesehen, mit dessen Hilfe festgestellt werden kann, ob Vorlagen im Vorlagendepot vorhanden sind. Diese Information kann an die Steuerungselektronik weitergeleitet oder optisch oder akustisch angezeigt werden. Der Vorlagensensor 32 ist im Vorlagendepotboden 30 vorzugsweise so angeordnet, daß auch kleinformatige Vorlagen detektiert werden können.

Ferner umfaßt das Vorlagendepot 3 vorzugsweise eine Einrichtung am Vorlagendepotboden 30, um Luftströme auf die Seitenkanten der Vorlagen zu richten. Genauer gesagt wird das Vorlagendepot 3 seitlich von zwei sich parallel zur Transportrichtung erstreckenden Seitenwandhohlelementen 34, 34' begrenzt, die über Stutzen 33, 33' mit Druckluft versorgt werden können. An den Kanten, an denen die Seitenwandhohlelemente 34, 34' an den Vorlagendepotboden 26 stoßen, wird durch seitliche Druckluftaustrittsöffnungen 35, 35', die vorzugsweise schlitzförmig ausgebildet sind, Druckluft zugeführt, die in das Vorlagendepot 3 strömt, wie es durch die Pfeile 36 angezeigt ist So entsteht für die unteren Vorlagen ein Luftkissen zwischen aufeinanderliegenden Vorlagen, das die Vereinzelung dieser Vorlagen erleichtern soll.

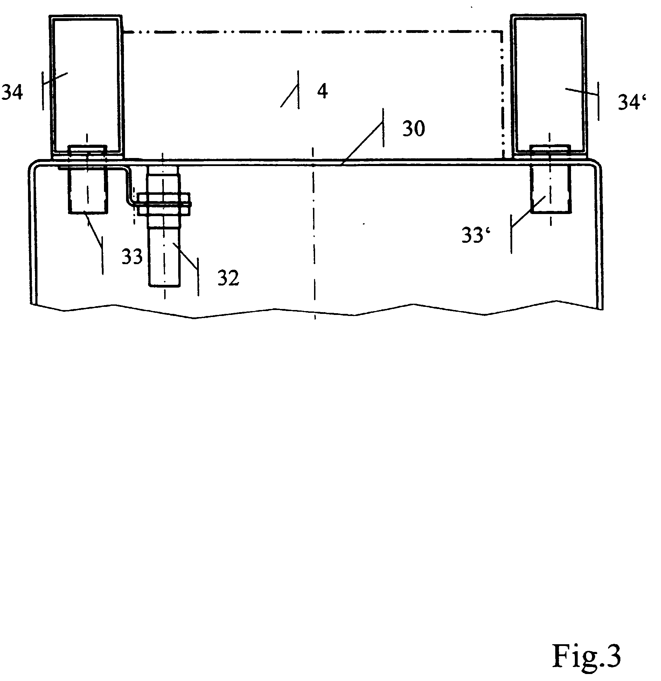

Fig. 3 zeigt einen Querschnitt durch die Druckluftversorgung für das Vorlagendepot 3 entlang der Linie III-III in Fig. 2. Um die Luftzufuhr an den Kanten je nach Beschaffenheit der Vorlagen regulieren zu können, sind geeignete Ventile vorgesehen (nicht gezeigt). So ist es möglich, die Luftmenge für das gesamte Seitenwandhohlelement 34 bzw. 34' zu regulieren. Es kann auch vorgesehen werden, die aus den einzelnen seitlichen Druckluftaustrittsöffnungen 35 ausströmende Luftmenge individuell zu regeln, indem jeder Druckluftaussrittsöffnung 35 ein Ventil zugeordnet ist (nicht gezeigt).

Das Vorlagendepot 3 kann in einer Ausführungsform auch eine Einrichtung umfassen, um am Vorlagendepotboden 30 einen Luftstrom auf die Unterseite der im Vorlagendepot 3 befindlichen Vorlagen zu richten (in den Figuren nicht gezeigt). Diese Einrichtung wird vorzugsweise durch eine oder mehrere Druckluftaustrittsöffnungen realisiert Die Druckluftzufuhr kann über geeignete Ventile gesteuert werden

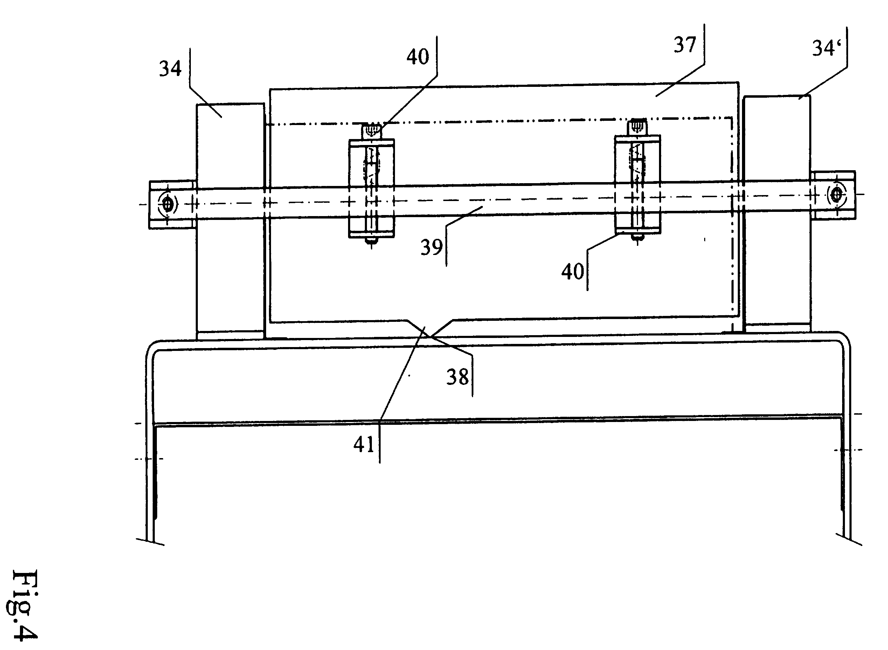

Das Vorlagendepot 3 wird in Transportrichtung durch eine vordere Vorlagendepotbegrenzung 37 begrenzt, wie sie in Fig. 4 gezeigt ist. Diese Vorlagendepotbegrenzung 37 ist in der Höhe verstellbar, so daß am Boden des Vorlagendepots 3 ein in seiner Höhe variabler Spalt 38 gebildet wird, durch den einzelne Vorlagen aus dem Vorlagendepot 3 abgezogen werden können. Vorzugsweise ist die vordere Vorlagendepotbegrenzung 37 senkrecht zur Vorlagenebene angeordnet, während ihre Unterkante senkrecht zur Transportrichtung verläuft. Die Höhenverstellung der vorderen Vorlagendepotbegrenzung 37, die von einem Trägerelement 39 gehalten wird, kann über Stellschrauben 40, 40' mit Feingewinde erfolgen, die manuell betätigt werden können.

Die vordere Vorlagendepotbegrenzung 37 kann sich über die gesamte Breite des Vorlagendepots 3 erstrecken oder nur einen Teil dieser Breite einnehmen. Wenn sich die Vorlagendepotbegrenzung 37 nicht über die gesamte Breite erstreckt, ist sie vorzugsweise auch in der Richtung der Breite verstellbar.

In einer bevorzugten Ausführungsform nimmt die vordere Vorlagendepotbegrenzung 37 in einem oberen Abschnitt im wesentlichen die gesamte Breite des Vorlagendepots 3 ein, während sie in einem unteren Abschnitt sich nur über einen Teil der Breite des Vorlagendepots 3 erstreckt und insbesondere in Form einer Spitze 41 ausgebildet ist. Diese Spitze 41 ist vorzugsweise nicht in der Mitte der vorderen Vorlagendepotbegrenzung 37, sondern seitlich versetzt angeordnet, so daß die vordere Vorlagendepotbegrenzung 37 ihre Funktion auch für kleinformatige Vorlagen, die in das Vorlagendepot 3 vorzugsweise so eingebracht werden, wie es vorstehend beschrieben wurde, erfüllen kann. Die Höhe des Spalts 38 wird in dieser Ausführungsform von der Position der Spitze 41 bestimmt. Es ist darüber hinaus bevorzugt, seitlich eine Ausspaarung in der vorderen Vorlagendepotbegrenzung 37 vorzusehen oder die vorderer Vorlagendepotbegrenzung 37 abgeschrägt auszubilden, so daß Vorlagen mit umgeknickten Ecken nicht zu einem Vorlagenstau führen.

In einer weiteren bevorzugten Ausführungsform ist die vordere Vorlagendepotbegrenzung 37 auch in Transportrichtung verstellbar, so daß ihre Position in bezug auf die Einrichtung 5 zum Abziehen einzelner Vorlagen justiert werden kann.

In einer weiteren bevorzugten Ausführungsform besitzt der Vorlagendepotboden 30 Fig.1 eine oder mehrere senkrecht zur Transportrichtung verlaufende Abstandhalter 99. Sie sind typischerweise einige Millimeter hoch und vorzugsweise einige Millimeter breit. In einer besonderen Ausführungsform können sie in der Ebene des Vorlagendepotboden 30 parallel zueinander verschiebbar angebracht sein (hier nicht gezeigt). Sie unterstützen die Ausbildung des weiter oben schon erwähnten Luftkissens, aufdem die Vorlagen 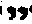 schwimmen". Insbesondere wird durch diese Maßnahme die maximale Höhe des Befüllens des Vorlagendepot mit Vorlagen deutlich erhöht, so daß der Benutzer mehr Vorlagen im Vorlagendepot der Vorrichtung bereithalten kann und nicht so oft Vorlagen nachlegen muß.

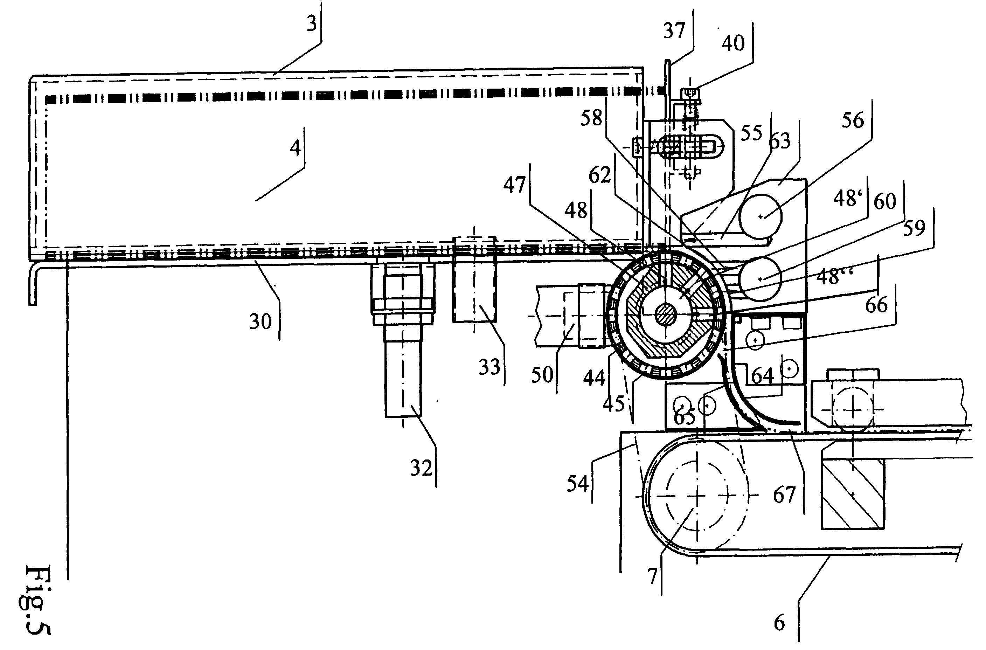

Ein vergrößerter Ausschnitt von Fig. 1, der im wesentlichen den Abschnitt A der Vorrichtung umfaßt, ist in Fig. 5 gezeigt, auf die nachstehend Bezug genommen wird, um darzustellen, wie die unterste Vorlage vom Vorlagenstapel 4 im Vorlagendepot 3 mit Hilfe der Einrichtung 5 zum Abziehen einzelner Vorlagen abgezogen wird.

Die Einrichtung 5 umfaßt eine Saugwalze 42, mit der eine Vorlage durch einen in seiner Höhe verstellbaren Spalt 38 abgezogen wird, wie nachstehend noch ausführlicher erläutert wird. Dazu ist es erfindungsgemäß von Bedeutung, daß in das Vorlagendepot 3 mit einer Blaseinrichtung ein Luftstrom auf die Vorderkante der Vorlage gerichtet wird, wenn diese von der Saugwalze 42 erfaßt wird. Dadurch wird der Aufbau eines homogenen Luftkissen unterstützt. Dies wiederum erleichtert eine zuverlässige Vereinzelung der Vorlagen.

Die Blaseinrichtung umfaßt eine oder mehrere Blasdüsen 55, die über einen Druckluftkanal 56 versorgt werden und mit denen ein Luftstrom im wesentlichen auf die Vorderkanten der untersten Vorlagen des Vorlagenstapels 4 gerichtet wird. Der Druckluftkanal 56 ist mit einem Druckluft-Anschlußstutzen 57 versehen, über den eine Verbindung mit einer Druckluftquelle erfolgt. Eine zweckmäßige Realisierung ist ein Hohlelement mit einer oder mehreren Öffnungen, wie einer Reihe von Löchern, die sich über die Breite des Elements erstreckt, das mit Druckluft beaufschlagt wird.

Die untersten Vorlagen 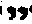 schwimmen" durch das erzeugte Luftkissen. Um das Vereinzeln der Vorlagen, d.h. das Abziehen einzelner Vorlagen von der Unterseite des Vorlagerstapels 4, zu ermöglichen, während die anderen Vorlagen im Vorlagendepot 3 zurückbleiben, weist das Vorlagendepot 3 die bereits beschriebene vordere Vorlagendepotbegrenzung 37 an der in Transportrichtung gesehen vorderen Seite auf, mit deren Hilfe der Spalt 38 gebildet wird. Das Abziehen der Vorlagen durch den Spalt 38 erfolgt mit der Saugwalze 42, die in bezug auf die vordere Vorlagendepotbegrenzung 37 so angeordnet ist, daß sie auf die unterste Vorlage im Vorlagendepot 3 eine Saugkraft ausüben kann. Der Vorlagendepotboden 30 erstreckt sich also nur so weit in Richtung auf die vordere Vorlagendepotbegrenzung 37, daß eine Ausspaarung verbleibt, in der eine Vorlage in Kontakt mit der Saugwalze 42 kommen kann.

In der Höhe ist die Saugwalze 42 in bezug auf den Vorlagendepotboden 30 so angeordnet, daß eine Vorlage von der Unterseite des Vorlagenstapels 4 angesaugt und durch Rotation der Saugwalze 42 abgezogen werden kann. Ihre Rotationsachse 43 befindet sich in einem Abstand, der etwa dem Radius der Saugwalze 42 entspricht, unterhalb der Vorlagenebene (d.h. unterhalb des Vorlagendepotbodens 30) und verläuft senkrecht zur Transportrichtung.

Die Länge der Saugwalze 42 kann der Breite des Vorlagendepots 3 entsprechen; vorzugsweise weist die Saugwalze 42 jedoch eine geringere Länge, die beispielsweise etwa der Hälfte der Breite des Vorlagendepots 3 entspricht, auf. Im Seitenbereich neben der Saugwalze 42 befindet sich in diesem Fall vorzugsweise ein Führungselement (nicht gezeigt), über das Vorlagen vom Vorlagendepotboden 30 aus beim Transport gleiten können.

Die Saugwalze 42 wird vorzugsweise indirekt mit Hilfe eines zentralen Motorantriebs über einen Antriebsriemen 54, wie einen Zahnriemen, der einerseits an einem mit der Rotationsachse 43 der Saugwalze 42 verbundenen Antriebsrad 53, wie einem Zahnriemenrad, und andererseits an einem mit der Achse der vorderen Transportwalze 7 des ersten Abschnitts 6 des Bandsystems verbundenen Antriebsrad angreift, angetrieben, wie nachstehend noch ausführlicher beschrieben wird. Die Vorlage wird mit Hilfe des Unterdrucks ergriffen und durch die Rotation der Saugwalze 42 transportiert (Prinzip des Unterflursauganlegers).

Es ist bevorzugt, Unterdruck nur an einen streifenförmigen Abschnitt der Oberfläche der Saugwalze 42 anzulegen, der sich in Längsrichtung der Saugwalze 42 erstreckt und vorzugsweise etwa ¼ der Oberfläche der Saugwalze ausmacht, so daß eine Vorlage ergriffen, durch Rotation der Saugwalze 42 transportiert und dann in eine in Transportrichtung hinter der Saugeinrichtung angeordnete Einrichtung zum Weiterleiten der Vorlage eingeführt werden kann. Mit anderen Worten ist es bevorzugt, Unterdruck nur an den Abschnitt der Saugwalze 42 anzulegen, an dem die Vorlage an der Saugwalze 42 anliegen soll, während sie transportiert wird. Ferner ist es möglich, den Unterdruck anhängig von der Art (Dicke) der zu transportierenden Vorlage zu variieren.

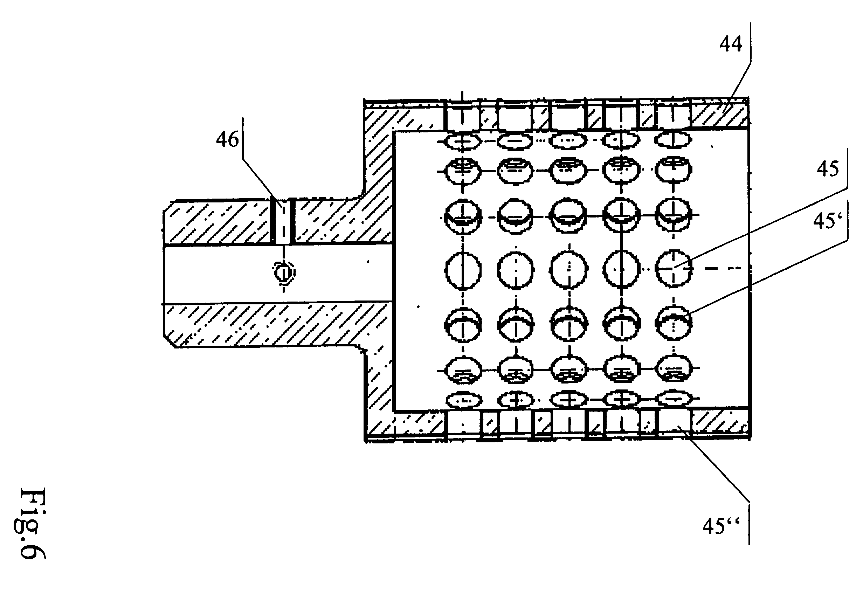

Eine zweckmäßige Ausgestaltung der Saugwalze 42 ist im Längsschnitt in Fig. 2, im Querschnitt in Fig. 5 und in vergrößerter Draufsicht, teilweise als Schnittdarstellung, in Fig. 6 gezeigt. In dieser Ausgestaltung umfaßt die Saugwalze 42 einen äußeren, beim Betrieb der Vorrichtung rotierenden Zylinder 44, bei dem Öffnungen 45 über die gesamte Oberfläche des Zylinders 44 verteilt sind, und einen inneren, in dem Zylinder 44 angeordneten, beim Betrieb in bezug auf die Vorrichtung fixierten, mit Öffnungen 48 versehenen Hohlkörper 47, dessen Öffnungen 48 nur in einem bestimmten Bereich der Oberfläche angeordnet sind, so daß sie sich in einem streifenförmigen Abschnitt befinden, der von Parallelen zur Rotationsachse 43 der Saugwalze 42 begrenzt wird, wobei eine Vakuumquelle mit dem Inneren des Hohlkörpers 47 verbunden ist, so daß die Öffnungen in einem bestimmten Bereich des äußeren Zylinders 44, der durch die Einstellung der Rotationsposition des inneren Hohlkörpers 47 in bezug auf die Vorrichtung festgelegt wird und in dem Öffnungen 48 im inneren Hohlkörper 47 Öffnungen 45 im äußeren Zylinder 44 entsprechen, mit Unterdruck beaufschlagt werden.

Durch geeignete Ausführung der Öffnungen 48 im inneren Hohlkörper 47 kann der Unterdruck, der an die Saugwalze 42 in dem Bereich angelegt wird, an dem die Vorlagen anliegen, variiert werden. So ist es bevorzugt, in dem Bereich, in dem die Vorlagen im Verlauf des Transports sich wieder von der Oberfläche der Saugwalze 42 ablösen sollen, einen geringeren Unterdruck anzulegen. Die Öffnungen 48 im inneren Hohlkörper 47, die diesem Bereich entsprechen, können entsprechend kleiner ausgeführt werden als in dem Bereich, in dem die Vorlage von der saugwalze 47 aus dem Vorlagendepot 3 abgezogen wird.

Der Hohlkörper 47 weist Durchführungen 49, 49' für die Rotationsachse 43 auf. Er kann zur Justierung in einem festgelegten Maß um die Rotationsachse 43 gedreht werden. Die Drehposition kann beispielsweise mit Hilfe einer Feststellspindel (nicht gezeigt) fixiert werden.

An einem Anschlußstutzen 50 kann mit einer Schlauchklemme 51 ein Schlauch (nicht gezeigt) befestigt werden, um den Hohlkörper 47 mit einer Vakuumquelle zu verbinden. Der notwendige Unterdruck kann durch eine Pumpe (z.B. Seitenkanal-Vakuumpumpe GV5.130/5 der Fa. Becker) erzeugt werden. Der effektiv herrschende Unterdruck kann durch ein geeignetes Ventil direkt in der Verbindung mit der Vakuumquelle verändert werden.

Mit dieser Anordnung kann also erreicht werden, daß Unterdruck nur an einen streifenförmigen Abschnitt der Saugwalze 42 angelegt wird, wobei dieser Abschnitt auch bei Rotation der Saugwalze 42 zum Transport von Vorlagen in bezug auf die Vorrichtung stationär ist. Im Querschnitt (vgl. Fig. 5) entspricht dies etwa einem Viertelkreis, in dem sich die Öffnungen 48, 48', 48'' des inneren Hohlkörper 47 der Saugwalze 42 befinden. Die Anordnung des streifenförmigen Abschnitts relativ zum Vorlagendepot 3 läßt sich durch Justierung des inneren, sich parallel zur Rotationsachse 43 der Saugwalze 42 erstreckenden Hohlköpers 47 festlegen. Insbesondere kann eingestellt werden, ab welcher Grenzlinie in Transportrichtung Unterdruck angelegt wird, auf welchen Bereich einer Vorlage im Vorlagendepot 3 also ein Sog durch die Saugwalze 42 ausgeübt wird. Die optimale Position kann leicht durch Versuche bestimmt werden.

Um sicherzustellen, daß während des Ergreifens der Vorlagen durch die Saugwalze 42 auch wirklich nur eine Vorlage ergriffen wird, befindet sich in Transportrichtung hinter der Blaseinrichtung eine Saugeinrichtung, mit der ein Sog auf die Oberseite der von der Saugwalze 42 aufgenommenen Vorlage ausgeübt wird. Die Saugeinrichtung ist gegenüber dem Bereich der Saugwalze 42 angeordnet, an dem die Vorlage anliegt. Die durch die Saugeinrichtung auf die Vorlage ausgeübte Saugkraft ist kleiner als die von der Saugwalze 42 ausgeübte Saugkraft.

Typischerweise umfaßt die Saugeinrichtung, wie es im Querschnitt in Fig. 5 gezeigt ist, Saugdüsen 58, 59, die so angeordnet sind, daß in einem Streifen, der sich senkrecht zur Transportrichtung erstreckt, ein Sog ausgeübt werden kann. An die Saugdüsen 58, 59 wird über einen Vakuumkanal 60, der wiederum über einen Vakuumanschlüßstutzen 61 mit einer Vakuumquelle verbunden ist, Unterdruck angelegt. Die Saugeinrichtung kann beispielsweise durch ein Hohlelement mit einer oder mehreren geeignet angeordneten Öffnungen, wie einer Reihe von Löchern, die sich über die Breite des Elements erstreckt, realisiert werden, wobei an das Hohlelement ein Unterdruck angelegt wird.

Hat die Saugwalze 42 tatsächlich nur eine Vorlage aufgegriffen, so liegt diese auch im Bereich der Saugeinrichtung an der Saugwalze 42 an, da die Saugwalze 42 eine größere Saugkraft auf die Vorlage ausübt. Für den Fehlerfall, daß zwei übereinanderliegende Vorlagen aufgegriffen wurden, übt die Saugeinrichtung eine Kraft auf die obere Vorlage aus, während die untere Vorlage an der Saugwalze 42 anliegt, so daß die beiden Vorlagen getrennt werden können.

Die Obere Vorlage wird von der Saugeinrichtung festgehalten, solange die untere Vorlage Saugkontakt mit der Saugwalze 42 hat. Danach wird die zunächst von der Saugeinrichtung festgehaltene Vorlage von der rotierenden Saugwalze 42 erfaßt. Durch die Saughaftung und die Rotationsbewegung der Saugwalze 42 wird sie dann abtransportiert. Danach geht das Vereinzeln der Vorlagen weiter, wie es vorstehend beschrieben wurde.

Unterstützt wird dieser Vorgang dadurch, daß ein stärkerer Unterdruck an der Saugwalze 42 anliegt als an der Saugeinrichtung. Durch die größere Oberfläche kann mit der Saugwalze 42 auch eine größere Kraft auf festgehaltene Vorlagen ausgeübt werden. Die beschriebene Anordnung hat also die Funktion einer Doppelvorlagenkontrolle.

In Ergänzung zu der schon beschriebenen Ausführungsform der Doppelvorlagenkontrolle hat sich die folgende Anordnung als vorteilhaft erwiesen. Mit ihr findet nicht nur die Kontrolle auf das Vorhanden sein von Doppelvorlagen statt, sondern es kann eine effiziente Wiedereingliederung in den laufenden Vereinzelungsprozeß durchgeführt werden. Insbesondere enfällt die manuelle Neuanlage der Doppelbögen in das Vorlagendepot, verbunden mit einem Wiederanfahrverfahren der Vorrichtung.

Dazu wird an dem Vakuum-Ansaugstutzen der Saugeinrichtung ein Ventil, wie ein elektrisches Proportional-Ventil (für Unterdruck), angebracht. Durch Veränderung des effektiven Öffnungs-Querschnitts im Inneren des Ventils kann die Stärke des angelegten Unterdrucks leicht verändert werden.
Zur Steuerung dienen zwei Sensoren 93, 93 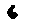 und 95,95 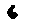 . Sie sind z.B. am Beginn des Transportbandes 6 am Ende der Ausgabeöffung 67 quer zur Transportrichtung der Papiervorlagen angebracht. Benutzt man 1 Weg-Lichtschranken, dienen die Sensorhalterungen 93, 93 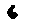 für eine spezielle Ausführungsform.

Die Schaltungselektronik der Vorrichtung wertet die Signale z.B. wie folgt aus: Im Falle einer einzelnen Vorlage wird Sensor 93 aktiviert. Er veranlaßt, daß das Proportionalventil sich ganz öffnet und der volle Unterdruck durch die obere Saugdüse 58 an die vorbeigleitende Vorlage trifft. Dies hat zur Folge, daß diese Vorlage durch den starken Unterdruck angezogen und festgehalten wird.
Die Schaltungselektronik wertet nun den Sensor 94 aus. In dem Fall, daß sich nur eine Vorlage in dem Bereich der Vorlagenführungsflächen 64, 65 befindet, wird der Sensor 94 in keinem Fall unterbrochen, da die Vorlage festgehalten wird. Nach einem kurzen Zeitinkrement (anhängig von der gewählten Transportgeschwindigkeit) wird das Proportionalventil wieder geschlossen. Da die verwendeten Vorlagen nicht luftdicht sind und u.U. auch nicht luftdicht anliegen, baut sich der Unterdruck langsam ab. Die Zeit zum Abbau des Unterdrucks kann man verkürzen, indem man ein Ventil wählt, daß einen eigenen Kanal zur Belüftung besitzt. Die Vorlage wird nun von der Sauwalze 42 wieder ergriffen und aus der Ausgabenöffung (67) auf das Transportband 6 geschoben, wo es nun zum Weitertransport erfaßt werden kann.

In dem Fall, daß sich zwei Vorlagen im Bereich der Vorlagenführungsflächen 64, 65 befinden, verhält sich die Schaltelektronik wie folgt:
Die oberste Vorlage wird wie oben beschrieben ergriffen, wenn Sensor 93 auslöst. Die Saugkraft des Unterdrucks reicht jedoch nicht aus, um auch die untere Vorlage zu erfassen. Diese wird weiterhin von dem herrschenden Unterdruck der Saugwalze 42 gehalten, und durch die Rotationsbewegung der Walze transportiert. Sobald die Vorlage den Sensor 94 auslöst, wird der schon herrschende Unterdruck an der schon festgehaltenen Vorlage beibehalten, so daß die Vorlage nicht ergriffen werden kann. Die untere Vorlage wird wie weiter oben schon beschrieben ergriffen und wie üblich aus dem Bereich der Vorlagenführungsflächen 64, 65 auf das Transportband 6 geschoben und dort erfaßt.
Dies hat zur Folge, daß der Sensor 94 nun nicht mehr unterbrochen ist. Dieses wird von der Schaltungselektronik umgesetzt, und nach einer kleinen Zeitspanne (abhängig von der gewählten Geschwindigkeit) wird das Ventil wie schon weiter oben beschrieben geschlossen, so daß der Unterdruck wieder abgebaut werden kann, und die bisher gehaltene Vorlage nun aus dem Bereich der Vorlagenführungsflächen 64, 65 entfernt werden kann.

Dieses Verfahren kann weiter ausgestaltet werden, indem eine weitere Saugeinrichtung 96 unterhalb der ersten Saugeinrichtung z.B. vor der Eingabeöffnung 66 oder auf der Seite der oberen gekrümmten Vorlagenführungsfläche 64 angebracht wird. Sie besteht aus einer Öffnung mit einem Stutzen 97 und einem Vakuumkanal 98. An dem Stutzen ist wiederum über einen Unterdruckschlauch ein Ventil 92 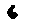 in der Unterdruckzuleitung angebracht. Die zweite Saugeinrichtung kann auch einfach dadurch realisiert werden, daß bei der ersten Saugeinrichtung weitere Reihen von Saugdüsen vorgesehen werden. Auf diese Weise kann auf einer größeren Fläche ein Sog auf eine Vorlage ausgeübt werden.

Mit den Sensoren 93 und 94 arbeitet die Schaltungselektronik genauso wie schon weiter oben beschrieben im zusammen. Mit dieser Variante können Vorlagen auch noch sicher erfaßt (gehalten) werden, wenn diese eine höhere Papiersteifigkeit aufweisen. Weiterhin ist der Einsatz einer solchen Einrichtung bei höheren Transportgeschwindigkeiten der Vorlagen sinnvoll, damit die Massenträgheit der Vorlagen überwunden werden kann.

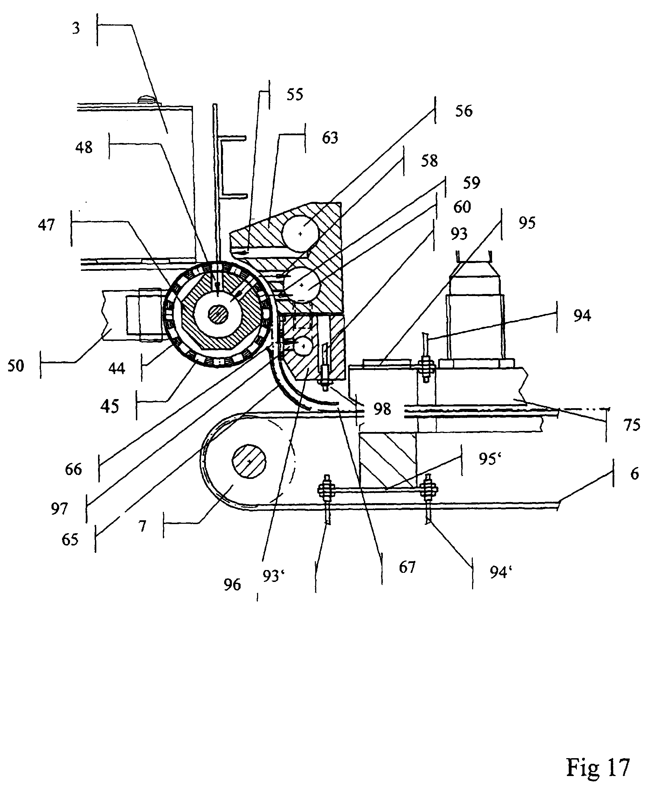

In einer Alternativen Ausführungsform Fig. 17 können die beschrieben Sensoren 93 und 94 auch weiter oben, das heißt im Bereich der Vorlagenführungsflächen 64, 65 angebracht werden. Damit können auch kleinere Vorlagenformate wie beschrieben sicher erfaßt werden.

Es ist möglich, z.B. mit Hilfe von Ventilen, den an die Saugwalze 42 oder die Saugeinrichtung angelegten Unterdruck zu variieren. So kann ein geeigneter Unterdruck abhängig von der Beschaffenheit der Vorlagen eingestellt werden. Ferner kann der Unterdruck auch zeitlich im Verlauf des Transports einer Vorlage variiert werden. Soll eine Vorlage von der Saugeinrichtung angesaugt und festgehalten werden, kann kurzzeitig der an die Saugwalze 42 angelegte Unterdruck verringert oder aufgehoben werden, so daß eine Vorlage besonders wirksam von der Saugeinrichtung angesaugt werden kann. Werden zwei Vorlagen von der Saugwalze 42 gleichzeitig abgezogen, so kann auf diese Weise die obere Vorlage von der Saugeinrichtung sicher festgehalten werden. Andererseits kann auch der an die Saugeinrichtung angelegte Unterdruck für eine geeignete Zeitspanne verringert werden, um einen besonders glatten Transport durch die Saugwalze 42 zu ermöglichen. Nachdem eine Vorlage durch die Saugwalze vom Vorlagenstapel 4 abgezogen wurde, kann also beispielsweise zurächst der Sog durch die Saugwalze 42 relativ zum Sog der Saugeinrichtung verringert werden, so daß eine im Bereich der Saugeinrichtung befindliche Vorlage festgehalten wird, während anschließend der Sog durch die Saugeinrichtung relativ zur Saugwalze 42 verringert wird, um da Transport der Vorlage zu erleichtern. Werden zwei übereinanderliegende Vorlagen durch die Saugwalze 42 vom Vorlagenstapel 4 abgezogen, so kann der Unterdruck an der Saugeinrichtung aufrechterhalten werden, so daß die obere Vorlage festgehalten werden kann, während die untere von der Saugwalze 42 transportiert wird. Anschließend wird auch die zunächst festgehaltene obere Vorlage von der Saugwalze 42 erfaßt und weitertransportiert. Zur Steuerung des Unterdrucks kann die Position einer Vorlage mit Hilfe von geeignet angeordneten Sensoren festgestellt werden.

Besonders bevorzugt ist es, wenn die Steuerung des Unterdrucks so erfolgt, daß an die Saugeinrichtung ein Unterdruck angelegt wird, der ausreicht, um eine Vorlage festzuhalten, wenn ein in Transportrichtung hinter der Saugeinrichtung vorgesehener Sensor 93, 93' eine Vorlage detektiert, und das Anlegen des Unterdrucks, der ausreicht, um eine Vorlage festzuhalten, in Abhängigkeit eines Signals eines in Transportrichtung hinter dem ersten Sensor 93, 93' vorgesehenen zweiten Sensors 94, 94' wieder aufgehoben wird,
(a) weg der zweite Sensor nach Verstreichen eines festgelegten Zeitinkrements keine Vorlage detektiert oder,
(b) falls der zweite Sensor 94, 94' an dem unter (a) genannten Zeitpunkt eine Vorlage detektiert, wem ein festgelegtes Zeitinkrement verstrichen ist, nachdem der zweite Sensor 94, 94' keine Vorlage mehr detektiert.

Der Fall (b) entspricht einer Situation, in der die Saugwalze 42 zunächst zwei übereinanderliegende Vorlagen erfaßt hat.

Bei der vorstehenden Betriebsweise kann der Unterdruck, der an die Saugwalze 42 angelegt wird, kurzzeitig verringert werden, wenn eine von der Saugwalze 42 erfaßte Vorlage in den Bereich der Saugeinrichtung gelangt ist und an die Saugeinrichtung Unterdurck angelegt oder der anliegende Unterdruck verstärkt wird.

In einer zweckmäßigen Ausgestaltung sind die Saugdüsen 58, 59 der Saugeinrichtung in einer konkaven Fläche 62 angeordnet, die an die Form der Saugwalze 42 angepaßt ist, so daß zwischen der konkaven Fläche 62 und der Saugwalze 42 ein Spalt verbleibt, durch den die Vorlagen durch die Rotation der Saugwalze 42 transportiert werden. Im Fehlerfall, daß von der Saugwalze 42 zwei Vorlagen ergriffen wurden, wird die obere Vorlage durch Saugwirkung an der konkaven Fläche 62 festgehalten.

In einer weiteren bevorzugten Ausführungsform sind in der konkaven Fläche 62 Saugdüsen 58, 59 in zwei oder mehr Reihen angeordnet. Es sind also bespielsweise obere Saugdüsen 58 und untere Saugdüsen 59 vorgesehen. Wenn nun der Fehler auftritt, daß von der Saugwalze 42 mehr als zwei übereinanderliegende Vorlagen ergriffen wurden, dann wird die oberste Vorlage durch die in Transportrichtung erste Reihe von Saugdüsen, d.h. die oberen Saugdüsen 58, festgehalten. Eine oder mehrere weitere Vorlagen, die sich zwischen dieser von der Saugeinrichtung festgehaltenen und der an der Saugwalze 42 anliegenden Vorlage befinden, können dann mit Hilfe einer oder mehrerer weiterer Reihen von Saugdüsen, wie der unteren Saugdüsen 59, festgehalten werden, so daß die Vorlagen schließlich schuppenförmig gegeneinander versetzt von der Saugeinrichtung festgehalten werden. Währenddessen dreht sich die Saugwalze 42 und transportiert die unterste Vorlage ab. Ist dies geschehen, so wird die nächste Vorlage von der Saugwalze 42 ergriffen und abtransportiert, da sie die größte Kontaktfläche mit der Saugwalze 42 aufweist und daher auch mit der größten Kraft angesaugt wird. Auf diese Weise können, wem von der Saugwalze 42 zunächst zwei oder mehr Vorlagen ergriffen wurden, diese Vorlagen automatisch wieder nacheinander in richtiger Reihenfolge in den Prozeß eingereiht werden.

In einer weiteren bevorzugten Ausführungsform sind die Blaseinrichtung und die Saugeinrichtung integral als ein Blas-Saug-Element 63 ausgebildet. Die der Saugwalze 42 zugewandte Seite des Blas-Saug-Elements 63, die im wesentlichen gegenüber dem Abschnitt der Saugwalze 42 liegt, an den Unterdruck angelegt wird, hat im Querschnitt vorzugsweise die Form eines Viertelkreises und ist an die Form der Saugwalze 42 angepaßt. Im oberen Abschnitt des Viertelkreises sind eine oder mehrere Blasdüsen 55 vorgesehen. Vorzugsweise handelt es sich um Löcher, die in einer Reihe parallel zur Vorderkante einer transportierten Vorlage angeordnet sind und mit einem Blasdüsen-Druckluftkanal 56 in Verbindung stehen, der mit Druckluft beaufschlagt wird. Im mittleren Abschnitt sind Saugdüsen 58, 59 vorgesehen. Vorzugsweise handelt es sich um Löcher, die in einer oder mehreren Reihen parallel zur Vorderkante einer transportierten Vorlage angeordnet sind und mit einem Vakuumkanal 60 in Verbindung stehen, an den Unterdruck angelegt wird.

Die Saugwalze 42, die Blaseinrichtung und die Saugeinrichtung (bzw. das Blas-Saug-Element 63, falls die Blaseinrichtung und die Saugeinrichtung als Einheit ausgebildet sind) sind vorzugsweise aus Metall, beispielsweise rostfreiem Stahl, gefertigt. Der innere Hohlkörpers 47 kann beispielsweise auch aus Kunststoff gefertigt werden. Die Oberfläche der Saugwalze 42 kann zur Optimierung der Reibkraft mit einer Gummioberfläche überzogen wobei die Öffnungen der Saugwalze 42 frei bleiben.

Der bisher beschriebener Abschnitt der Vorrichtung, der der Vereinzelung mehrerer, als Stapel zugeführter Vorlagen, die unterschiedliche Formate und/oder Dicken aufweisen können, dient, kann auch unabhängig von den anderen Teilen und Abschnitten der Vorrichtung verwendet werden, wenn Vorlagen zuverlässig vereinzelt werden sollen. Die vereinzelten Vorlagen können anschließend beispielsweise von einem geeigneten Transportsystem aufgenommen und einer beliebigen Weiterbehandlung zugeführt werden.

In der erfindungsgemäß bevorzugten Vorrichtung wird die mit Hilfe der Saugwalze 42 aufgegriffene Vorlage in eine in Transportrichtung hinter der Saugeinrichtung angeordnete Einrichtung zum Weiterleiten der Vorlage mit einer von einer oberen gekrümmten Vorlagenführungsfläche 64 und einer unteren gekrümmten Vorlagenführungsfläche 65 gebildeten Vorlagenführungseinrichtung einer Eingabeöffnung 66, die vorzugsweise trichterförmig ausgebildet ist, eingeführt, wie es in Fig. 5 gezeigt ist. Die Vorlage tritt aus dieser Vorlagenführungseinrichtung durch eine Ausgabeöffnung 67 wieder aus.

Ausgehend vom Vorlagendepot 3 wird die Vorlage also auf einer S-förmigen Strecke geführt. Mit Hilfe der Saugwalze 42, die in einem Abschnitt, der etwa ¼ ihrer Oberfläche entspricht, eine Saugwirkung auf die Vorlage ausübt, wird sie zunächst, bezogen auf ihre Position im Vorlagendepot, um 90° gebogen. Mit Hilfe der Vorlagenführungseinrichtung wird sie dann nochmals um 90° gebogen, allerding in entgegengesetzter Richtung. Dadurch sollen Vorlagen, die noch aneinander haften, z.B. weil sie vor dem Einlegen in das Vorlagendepot mittels Heftklammern o.ä mechanischer Hilfsmittel zusammengefügt waren oder gelocht sind und daher noch miteinander verhakt sind, gelockert werden. Benachbarte Vorlagen erfahren eine kleine Verschiebung gegeneinander, so daß sichergestellt wird, daß sie nicht mehr zusammenhaften. Ein solcher Fehlefall kann mit einer weiteren Doppelvorlagenkontrolle, die nachstehend noch erläutert wird, erkannt werden.

Zweckmäßigerweise werden die Vorlagen, die aus der Vorlagenführungseinrichtung austreten, von einer an der Ausgabeöffnung 67 der Vorlagenführungseinrichtung ansetzenden weiteren Transporteinrichtung aufgenommen.

In der erfindungsgemäßen Vorrichtung zur Datenerfassung ist zu diesem Zweck ein Bandsystem vorgesehen. Vorlagen, die aus der Vorlagenführungseinrichtung austreten, werden von diesem an der Ausgabeöffnung der Vorlagenführungseinrichtung ansetzenden Bandsystem (wie dem ersten Abschnitt des Bandsystems 6) erfaßt, das sich in der Richtung bewegt, in der die Vorlagen transportiert werden sollen. Die auf dem Bandsystem aufliegende Vorlage wird dann weitertransportiert.

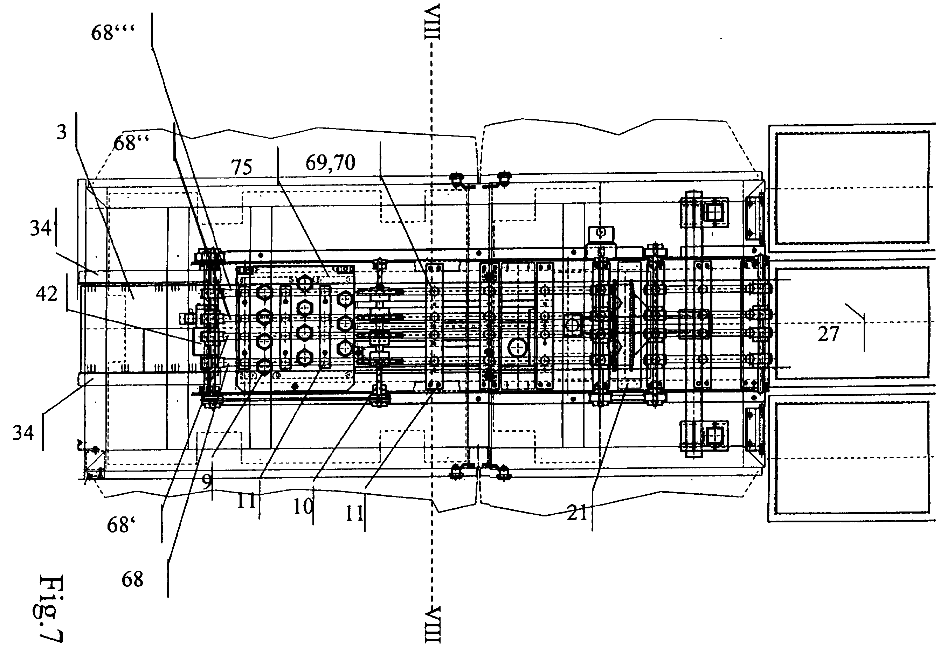

Das Bandsystem, das in einer Draufsicht in Fig. 7 dargestellt ist, kann durch ein über die Breite der Vorrichtung sich erstreckendes umlaufendes Transportband oder vorzugsweise mehrere schmalere parallele umlaufende Transportbänder 68 realisiert werden. Beispielsweise können vier Transportbänder 68, 68', 68'', 68''' vorgesehen die jeweils 4 bis 6 cm breit sind. Bei den Transportbändern 68 kann es sich um Bänder mit einem Gewebekern und einem gummiähnlichen Überzug oder vorzusgweise um mit einem Metallnetz oder auf andere geeignete Weise verstärkte Kunststoffbänder handeln. Ferner kann das Bandsystem in mehrere Abschnitte untergliedert sein. Bei der in Fig. 1 gezeigten bevorzugten Ausführungform, bei der die Digitalisierung der Vorlagen mit Hilfe der beiden Digitalkameras 15, 17 erfolgt, so daß Vorder- und Rückseite in einem Durchgang erfaßt werden können, wobei die Digitalkamera 17 die Unterseite der Vorlage erfaßt, ist das Bandsystem in den ersten Abschnitt 6 und den zweiten Abschnitt 22 geteilt, wobei im dadurch entstehenden Zwischenraum, in dem die Vorlagenfürungseinrichtung 21 vorgesehen eine Erfassung der Unterseite der Vorlage möglich ist, wie nachstehend noch ausführlicher erläutert wird. Das Bandsystem kann noch in weitere Abschnitte untergliedert werden, wobei in den dabei entstehenden Zwischenräumen beispielsweise Sensoren verschiedener Art vorgesehen sein können. Bei einem Bandsystem mit mehreren Abschnitten erfolgt die Anordnung der Abschnitte des Bandsystems und der Zwischenräume so, daß die Vorlage über den Zwischenraum geschoben werden kann, in dem keine Transportmittel vorgesehen sind, sondern vorzugsweise eine Abstützeinrichtung, über die die Vorlage gleiten kann, vorhanden ist.

Wie bereits erwähnt, werden die Transportbänder 68 über Transportbandrollen 7, 8 im ersten Abschnitt 6 des Bandsystems und über Transportbandrollen 23, 24 im zweiten Abschnitt 22 des Bandsystems geführt. Werden meherer schmalere Transportbänder verwendet, wie es vorstehend beschrieben wurde, so können die Transportbandrollen 7, 8, 23, 24, angepaßt an die Breite der Transportbänder, unterteilt sein. Sie können aber auch walzenförmig ausgebildet sein und sich über die gesamte Breite des Transportsystems erstrecken.

Der Antrieb der Transportbänder 68 kann so erfolgen, daß jeweils eine der Transportbandrollen, über die die Transportbänder eines Abschnitts des Bandsystems laufen, angetrieben wird. Vorzugsweise erfolgt der Antrieb des gesamten Bandsystems zentral über den Elektromotor 25 (z.B. einen Elektromotor mit Frequenzumrichter). Weiterhin ist es bevorzugt, wenn auch der Antrieb anderer Transportmittel, die in der Vorrichtung vorgesehen sind, um Vorlagen zu transportieren, insbesondere auch der Antrieb der Saugwalze 42, mit Hilfe des gleichen Elektromotors 25 erfolgt. In diesem Fall wird nur ein Motor für das gesamte Transportsystem benötigt, und es kann sichergestellt werden, daß keine Synchronisationsprobleme auftreten können. Durch geeignete Wahl der Übersetzungsverhältnisse kann das Verhältnis der Geschwindigkeit, mit der Vorlagen von der Saugwalze 42 aufgegriffen und an das Bandsystem übergeben werden, zu der Geschwindigkeit, mit der die Vorlagen auf dem Bandsystem transportiert werden, eingestellt werden, so daß die Vorlagen auf dem Bandsystem einen für die weitere Bearbeitung erforderlichen Abstand, typischerweise von einigen Zentimetern, aufweisen.

Die Kraftübertratung zwischen dem Elektromotor 25 und den angetriebenen Transportbandrollen erfolgt vorzugsweise über Antriebsriemen, wie Zahnriemen, wobei jedoch auch andere Arten der Kraftübertragung gewählt werden können. Erfolgt der Antrieb über Zahnriemen, so ist eine Transportrolle, die angetrieben werden soll, an einer Seite mit einem Zahnriemenrad ausgestattet, an dem der Zahnriemen angreift.

Weist das Bandsystem mehrere Abschnitte auf, kann der Antrieb auch so erfolgen, daß eine der Transportbandrollen eines ersten Abschnitts über einen Treibriemen mit dem Motor verbunden ist, während eine der Transportbandrollen eines zweiten Abschnitts wiederum über einen Treibriemen mit einer der Transportbandrollen des ersten Abschnitts verbunden ist. Ferner kann auch der Antrieb anderer Transportmittel der Vorrichtung über Treibriemen erfolgen, die mit einer der Transportbandrollen verbunden sind. Auf diese Weise kann ein Transportband neben dem Vorlagentransport auch der Kraftübertragung auf andere Transportmittel der Vorrichtung dienen.

In einer bevorzugten Ausführungsform gelangt die Antriebskraft des Elektromotors 25 über einen Antriebsriemen an die vordere Transportbandrolle 23 des zweiten Abschnitts 22 des Bandsystems. Diese Transportbandrolle 23 ist wiederum mit der hinteren Transportbandrolle 8 des ersten Abschnitts 6 des Bandsystems verbunden. Die Transportbänder 68 des ersten Abschnitts 6 dienen auch der Kraftübertragung auf die Saugwalze 42, die mit der vorderen Transportbandrolle 7 des ersten Abschnitts 6 des Bandsystems über den Antriebsriemen 54 verbunden ist. Vorzugsweise handelt es sich bei dem Antriebsriemen um einen Zahnriemen, der einerseits an einem Zahnriemenrad auf der Achse der Transportbandrolle 7, andererseits an einem Zahnriemenrad auf der Rotationsachse 43 der Saugwalze 42 angreift.

Die Transportbänder 68 zum Vorlagentransport werden von einer Transportbandäbstützung 72 abgestützt, damit sie nicht durchhängen. Vorzugsweise ist auf der Oberseite der Transportbandabstützung 72 ein oberes Führungselement 73 vorgesehen, während auf der unteren Seite ein unteres Führungselement 74 angebracht ist. Das untere Führungselement 74 kann in Form einer Führungsschiene ausgebildet sein, die eine Querverschiebung des Transportbandes 68 verhindert, um so einen möglichst exakten Lauf sicherzustellen. Alternative kann das Durchhängen auch durch andere Mittel, wie Rollen oder Walzen, verhindert werden.

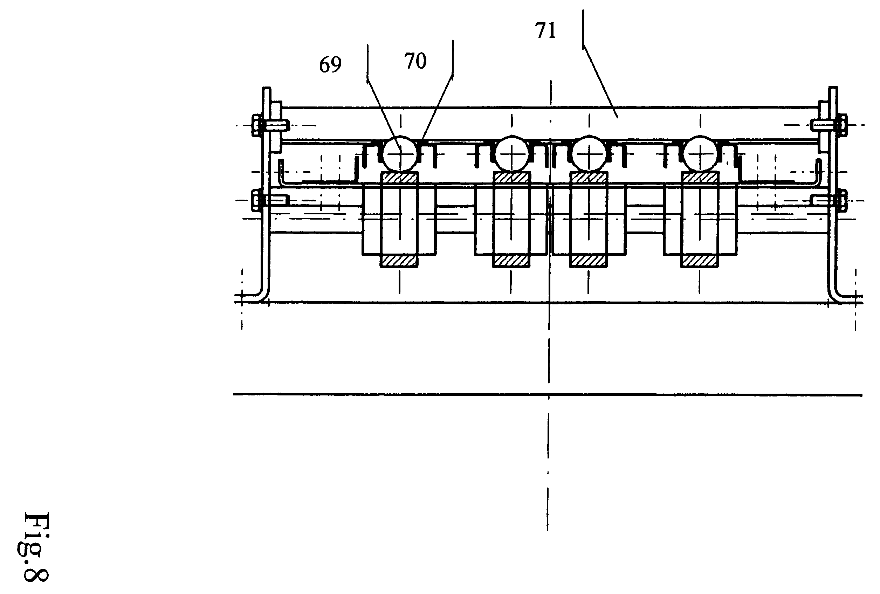

Damit Vorlagen vom Bandsystem zuverlässig transportiert werden, d.h. auf dem/den Transportbändern 68 aufliegen und nicht verrutschen, sind oberhalb des Bandsystems Vorlagenandruckeinrichtungen 11 vorgesehen. Eine bevorzugte Ausführungsform der Vorlagenandrückeinrichtung 11 ist in Fig. 8 gezeigt, die ein Querschnitt entlang der Linie VIII-VIII in Fig. 7 ist.

Der betreffende Abschnitt des Bandsystems wird von vier parallelen Transportbändern 68 gebildet Jedem der Transportbänder 68 ist in dem gezeigten Querschnitt eine Vorlagenandrückeinrichtung 11 zugeordnet.

In dieser Ausführungsform handelt es sich bei den Vorlagenandrückeinrichtungen 11 um Vorlagenandrückkugeln 69, beispielsweise aus Kunststoff, Glas oder Metall. Sie weisen typischerweise einen Durchmesser von 1 bis 3 cm auf. Die Vorlagenandrückkugeln 69 befinden sich in runden Aufnahmebuchsen 70, wobei der Durchmesser der Vorlagenandrückkugeln 69 etwas Kleiner ist als der der Aufnahmebuchsen 70. Die Aufnahmebuchsen 70 werden typischerweise mit Hilfe von Kunststoffhülsen gebildet. Durch die Eigengewichte der Vorlagenandrückkugeln 69, die nach unten kappenförmig aus den Aufnahmebuchsen 70 ragen und sich in diesen Aufnahmebuchsen 70 drehen können, wird die notwendige Reibung zwischen den Vorlagen und den Transportbändern 68 erzeugt, so daß ein zuverlässiger Transport der Vorlagen ermöglicht wird. Die Aufnahmebuchsen 70 werden zweckmäßigerweise von senkrecht zur Transportrichtung verlaufenden Halteelementen 71 (z.B. U-förmigen Schienen oder Stäben) getragen. In einer alternativen Ausführungsform können sich die Kugeln auch in Ausnehmungen, die direkt in den Halteelementen 71 ausgebildet sind, befinden.

Die Aufnahmebuchsen 70 können auch in Platten eingelassen sein, die oberhalb der Transportbänder 68 angeordnet sind und diese abdecken. Die Verwendung von Vorlagenandrückkugeln 69 ermöglicht einen besonders gleichmäßigen Vorlagentransport.

Die erfindungsgemäße Vorrichtung kann ferner einen oder mehrere Metallsensoren 9 (zweckmäßigerweise induktive Sensoren), an denen die Vorlagen vorbeigeführt werden, umfassen, um eventuell noch vorhandene metallische Heft- oder Büroklammern durch Messung der Induktion zu detektieren. Wird ein Metallgegenstand festgestellt, so erzeugt ein Sensor ein Signal, das optisch oder akustisch angezeigt werden kann. Es kann vorgesehen. werden, in diesem Fall die Vorrichtung über eine Steuerelektronik automatisch zu stoppen.

In einer bevorzugten Ausführungsform sind ein oder mehrere Metallsensoren 9 im Bereich des Transportbandes in Transportrichtung hinter der Ausgabeöffnung 67 der Vorlagenführungseinrichtung, jedoch vor dem Digitalisierungsabschnitt angeordnet. Ferner ist es bevorzugt, induktive Sensoren so anzuordnen, daß die volle Vorlagenbreite von einer oder mehreren parallelen Reihen der Sensoren überstrichen wird.

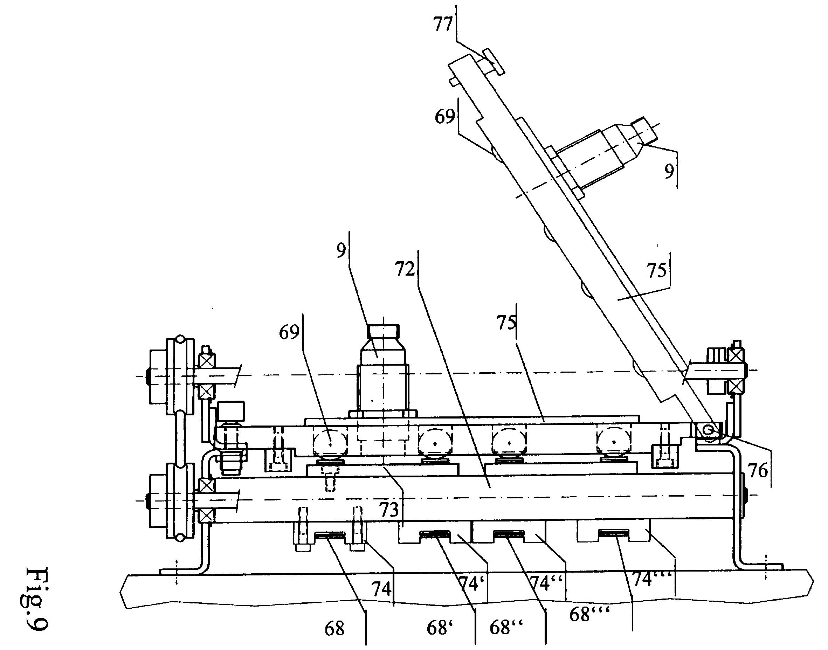

Eine besonders bevorzugte Ausführungsform ist in Fig. 9 gezeigt. Gemäß dieser Ausführungsform sind mehrere Metallsensoren 9 in einer Sensorträgerplatte 75 befestigt. Zweckmäßigerweise handelt es sich um eine Kunststoffplatte mit geeignet dimensionierten Bohrungen. Um einen zuverlässigen Transport der Vorlagen auch im Bereich der Metallsensoren zu ermöglichen, weist die Sensorträgerplatte vorzugsweise auch Ausnehmungen auf, die der Aufnahme von Vorlagenandrückkugeln 69 dienen.

Die Sensorträgerplatte 75 mit den Metallsensoren 9 und den Vorlagenandrückeinrichtung 11 ist vorzugsweise um ein Scharnier 76 manuell mit Hilfe eines Griffs 77 zu einer Seite des Bandsystems hochklappbar, um einen einfachen Zugang zum Transportsystem zu ermöglichen. In diesem Fall sind die Ausnehmungen vorzusgweise so gestaltet, daß die Vorlagenandrückkugeln 69 auch beim Hochklappen der Sensorträgerplatte 75 nicht herausfallen können.

Die erfindungsgemäße Vorrichtung kann ferner eine weitere Vereinzelungskontrolle 10 umfassen, die im Bereich des Transportbandes in Transportrichtung hinter der Ausgabeöffnung 67 der Vorlagenführungseinrichtung, jedoch vor dem Digitalisierungsabschnitt und vorzugsweise hinter den Metalldetektoren 9, falls diese vorgesehen sind, angeordnet ist. Diese weitere Vereinzelungskontrolle 10 kann in Form von einem oder mehreren Reibrädern 78 ausgebildet sein.

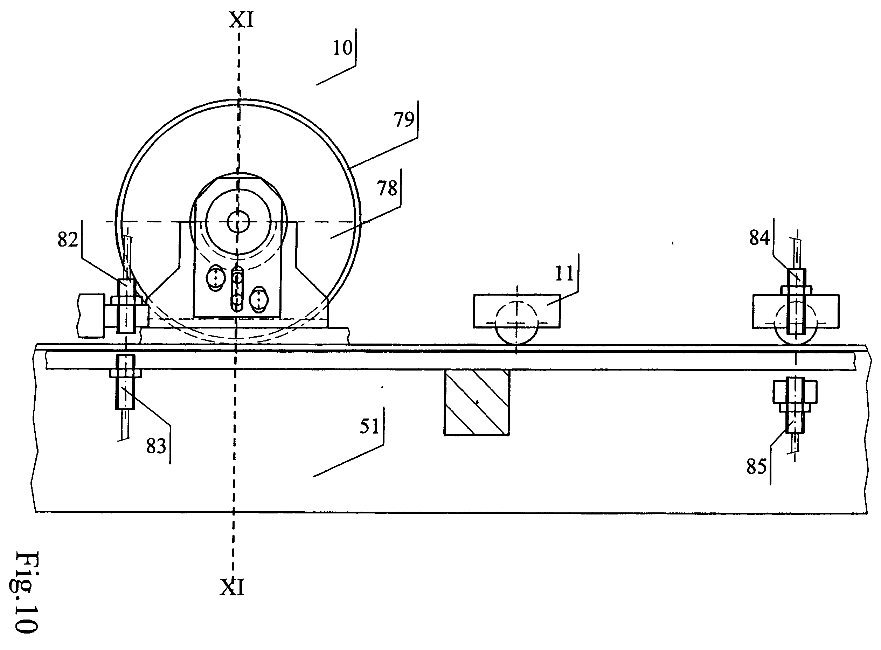

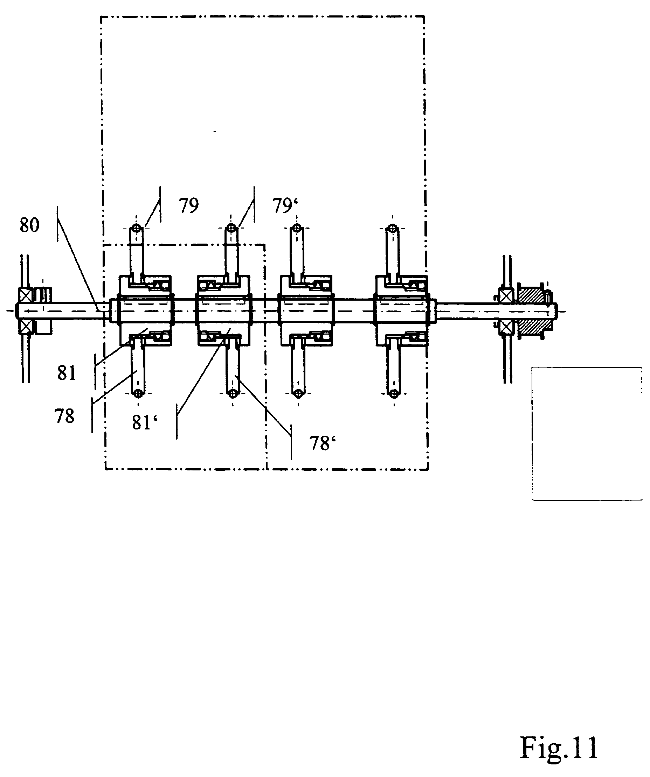

Fig. 10 ist eine Seitenansicht, teilweise als Querschnitt, einer bevorzugten Ausführungsform der Vereinzelungskontrolle 10; Fig. 11 ist ein Querschnitt von Fig. 10 entlang der Linie XI-XI. Die dargestellte Ausführungsform weist vier Reibrädern 78, 78', 78'', 78''' auf, die so angeordnet sind, daß sie die Gesamtbreite des Transportsystems abdecken. Auf diese Weise können Vorlagen verschiedener Formate (beispielsweise die DIN-Formate von A6 bis A4) untersucht werden. Ist das Bandsystem in mehrere parallele Transportbänder 68 geteilt, so sind die Reibräder 78 vorzugsweise so angeordnet, daß unter jedem der Reibräder 78 ein Transportband 68 verläuft.

Die gemeinsame Achse 80 der Reibräder 78 befindet sich über der Transportebene der Vorlagen senkrecht zur Transportrichtung. Jedes der Reibräder 78 besitzt eine Rutschkupplung 81. Über die Reibradauflagen 79 (gummierte Oberfläche) kann auf die Vorlagen eine Kraft übertragen werden. Diese Kraft stammt aus der Drehbewegung der Reibräder 78, die über einen Antriebsriemen, vorzugsweise einen Zahnriemen, der an der vorderen Transportbandrolle 7 des ersten Abschnitts 6 des Bandsystems angreift, in Tranportrichtung der Vorlagen angetrieben werden. Durch die gewählten Übersetzungsverhältnisse und den Radius eines Reibrades 78 ist die Bahngeschwindigkeit für einen Punkt auf der Oberfläche eines Reibrades 78 größer als die Geschwindigkeit des Transportbandes 68 (und damit der transportierten Vorlage). Dies wird dazu ausgenutzt, daß im Fehlerfall, wenn mindestens zwei Vorlagen noch übereinander liegen, die oberste der Vorlagen auf dem Bandsystem in Transportrichtung verschoben wird. Die Vorrichtung kann beispielsweise so ausgelegt sein, daß eine Verschiebung der oberen von zwei übereinanderliegenden Vorlagen von maximal 6 cm in Transportrichtung bei 30 cm Vorlagenlänge erfolgt. Ist jedoch nur eine Vorlage vorhanden (Normalfall), erlauben es die Rutschkupplungen 81 der Reibräder 78, daß diese Vorlage weitertransportiert werden kann, ohne daß eine Veschiebung erfolgt.

Um im Fehlerfall eine Vorlagenverschiebung detektieren zu können, sind zwei Sensoren S1 und S2 vorgesehen, die im Bereich des Bandsystems so angeordnet sind, daß sich einer der Sensoren (Sensor S1) in Transportrichtung vor den Reibrädern 78 befindet, während der andere (Sensor S2) sich hinter den Reibrädern 78 befindet. Die Sensoren S1, S2 können sich oberhalb des Bandsystems oder bei einer Ausführungsform mit mehreren schmalen Transportbändern 68 unterhalb der Vorlagenebene zwischen den Transportbändern 68 befinden. Es können sich auch Komponenten der Sensoren S1, S2 oberhalb und andere Komponenten unterhalb der Vorlagenebene zwischen den Transportbändern 68 befinden. In der in Fig. 10 gezeigten Ausführungsform handelt es sich beispielsweise um Sensoren, die jeweils aus einem Sensoroberteil 82 bzw. 84 und einem Sensorunterteil 83 bzw. 85 bestehen und auf die Unterbrechung eines Lichtstrahls ansprechen. Es können jedoch z.B. auch Sensoren verwendet werden, die mit sonstiger elektromagnetischer Strahlung oder mit Ultraschall arbeiten.

Die Senoren S1, S2 dienen der Längenmessung der Vorlagen. Jeder der Sensoren S1, S2 gibt jeweils ein erstes Signal, wenn eine Vorlage in seinen Meßbereich gelangt, und ein zweites Signal, wenn die Vorlage den Meßbereich wieder verläßt. Zwischen dem ersten und dem zweiten Signal werden Triggerimpulse gezählt, die von einem Drehgeber (Inkrementalgeber) erzeugt werden, der mit dem Transportsystem gekoppelt ist. Der Drehgeber ist eine feinmechanische Komponente, die aus einer Scheibe mit Schlitzen besteht. In einer Ausführungsform wird ein Lichtstrahl an diesen Schlitzen unterbrochen. Dadurch wird ein elektronischer Impuls erzeugt. Wird beispielsweise eine Scheibe mit 5000 Schlitzen/Umdrehung verwendet, so werden also 5000 elektronische Impulse/Umdrehung erzeugt. Die wie vorstehend beschrieben zwischen dem ersten und dem zweiten Signal gebildete Summe der Triggerimpulse ist dann ein Maß für die Länge der Vorlage.

Man erhält für Sensor S1 und Sensor S2 jeweils einen Wert. Bewirken nun die Reibräder 78 im Fehlerfall eine Verschiebung von übereinanderliegenden Vorlagen, so sind die von Sensor S1 und Sensor S2 festgestellten Werte nicht gleich. Vielmehr ist der vom Sensor S2 festgestellte Wert größer. Wird eine derartige scheinbare Längenänderung festgestellt, so wird elektronisch ein Signal erzeugt, das optisch oder akustisch angezeigt werden kann. Es kann vorgesehen werden, in diesem Fall die Vorrichtung über eine Steuerelektronik automatisch zu stoppen.

Die erfindungsgemäße Vorrichtung kann ferner zur Qualitätssicherung und/oder zur Automatisierung einen optionalen Abschnitt C zum Aufbringen eines Steuer- oder Prüfcodes mit einem Drucker 12, wie einem Tintenstrahldrucker, oder zum Erfassen eines Steuer- oder Prüfcodes mit einem Lesegerät wie ein Barcode-Lesegerät oder eine CCD-Flächenkamera, umfassen. Für das Lesegerät 13 ist vorzugsweise eine geeignete Lichtquelle (nicht gezeigt) vorgesehen. Das Aufbringen oder Erfassen eines Prüf- oder Steuercodes erfolgt vorzugsweise im Bereich des Transportbandes in Transportrichtung hinter anderen Prüf- und Kontrolleinrichtungen, wie Metallsensoren 9 oder Doppelvorlagenkontrolle 10, jedoch vor der Digitalisierung. Es ist jedoch auch möglich, daß das Erfassen eines Prüf- oder Steuercodes mit Hilfe einer der Digitalkameras, die der Digitalisierung der Vorlage dient, erfolgt.

Im Druckbetrieb kann eine Prüfzeichenfolge (z.B. bestehend aus Datum, Uhrzeit und/oder Vorlagennummer) oder ein sonstiger Code auf die Vorlagen aufgetragen werden. Eine derartige Prüfzeichenfolge oder ein sonstiger Code können im Klartext oder verschlüsselt als Barcode aufgebracht werden. Dies kann unabhängig von der Datenerfassung in einem separaten Arbeitsgang erfolgen. Damit ist es z.B. auch möglich, auf Vorlagen einen Steuercode aufzubringen und die mit dem Code versehenen Vorlagen dann erneut in die Vorrichtung einzulegen, um die Vorlagen zu digitalisieren, wobei der aufgedruckte Code nun zur Steuerung herangezogen wird.

Zum Aufbringen eines Steuer- oder Prüfcodes wird ein Drucker 10, vorzugsweise ein Tintenstrahldrucker (z.B. LINX 6000R der Firma Bluhm), verwendet. Der Kopf eines derartigen Druckers 10 ist über der Vorlagenebene angebracht. Er reicht bis auf eine Entfernung von 0,5-1 mm an die Vorlagen heran. Somit ist ein kontinuierlicher Beschriftung mit dem Tintenstrahldrucker ohne Anhalten und Beschleunigen der Vorlagen möglich.

Eine wie vorstehend beschrieben aufgebrachte Prüfreichenfolge oder ein Steuercode oder ein bereits auf den Vorlagen befindlicher Code kann gemäß einer bevorzugten Ausführungsform online mit Hilfe eines Lesegeräts 13 erfaßt werden. Als Lesegerät 13 eignet sich z.B. eine CCD-Flächenkamera (z.B. der Firma Dalsa 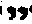 Progessive Scan CV-M10"), die in einem geeigneten Arbeitsabstand über der Vorlagenebene angeordnet ist. Der Aufnahmebereich der CCD-Kamera wird mit einer oder mehreren geeigneten Lichtquellen ausgeleuchtet (nicht gezeigt).

Das effektive Arbeitsfenster für diese CCD-Flächenkamera beträgt typischerweise etwa 1/3 der Fläche eines DIN A4-Bogens. Damit ist es möglich, während eines Durchgangs einer Vorlage mehrere (beispielsweise 3) Aufnahmen zu machen, aus denen dann elektronisch ein Bild eines größeren Breiches der Vorlage oder sogar der gesamten Vorlage erzeugt werden kann. Dies erlaubt es z.B., elektronisch die Vorlage daraufhin zu untersuchen, ob sie sich für eine spätere OCR-Behandlung eignet.

Die Steuerung des Lesegräts 13, wie einer CCD-Flächenkamera, kann mit Hilfe eines Sensors erfolgen. Zu diesem Zweck kann beispielsweise auch der Sensor S2 genutzt werden, falls die vorstehend beschriebene Vereinzelungskontrolle 10 unter Verwendung der Reibräder 78 vorgesehen ist. Mit Hilfe des Sensors wird festgestellt, daß eine Vorlage in den Aufnahmebereich des Lesegeräts 13 gelangt.

Wird als Lesegerät 13 eine CCD-Flächenkamera verwendet, so können die von der CCD-Flächenkamera aufgenommenen Daten einer OCR-Erkennung, vorzugsweise in Echtzeit, unterzogen werden. Die erhaltene Information kann z.B. im Zusammenspiel mit einer geeigneten Software für eine automatische Zuordnung des aktuellen 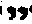 Jobs" zu einer Datenbank oder für eine Verteilung der gescannten Vorlagen in einem Computer-Netzwerk in nachfolgenden Schritten herangezogen werden. Ferner kann die Erkennung einer Prüfzeichenfolge auf der Vorlage zur Qualitätssicherung herangezogen werden.

Die Teile und Abschnitte der Vorrichtung, die bisher beschrieben wurden, dienen der zuverlässigen Vereinzelung und dem Transport von Vorlagen. Sie können daher auch unabhängig von einer Vorrichtung zur Datenerfassung eingesetzt werden, wenn Vorlagen oder Bogen aller Art zuverlässig vereinzelt werden sollen. Die Vorlagen oder Bogen können im Anschluß an die Vereinzelung beliebigen anderen Behandlungen unterzogen werden. Sie können nach der Behandlung abgelegt werden, wie es nachstehend noch beschrieben wird. Die beschriebenen Teile und Abschnitte können auch einzeln entsprechend ihrer Funktion eingesetzt werden.

Bei der erfindungsgemäßen Vorrichtung kann die Erfassung der Vorlage mit Hilfe einer oder mehrerer CCD-Flächen- oder -Zeilenkameras erfolgen. Bei der Vorrichtung kann eine Zeilenkamera über der Vorlagenebene und eine unter der Vorlagenebene angeordnet sein, so daß Vorder- und Rückseite der Vorlage in einem Durchgang erfaßt werden können

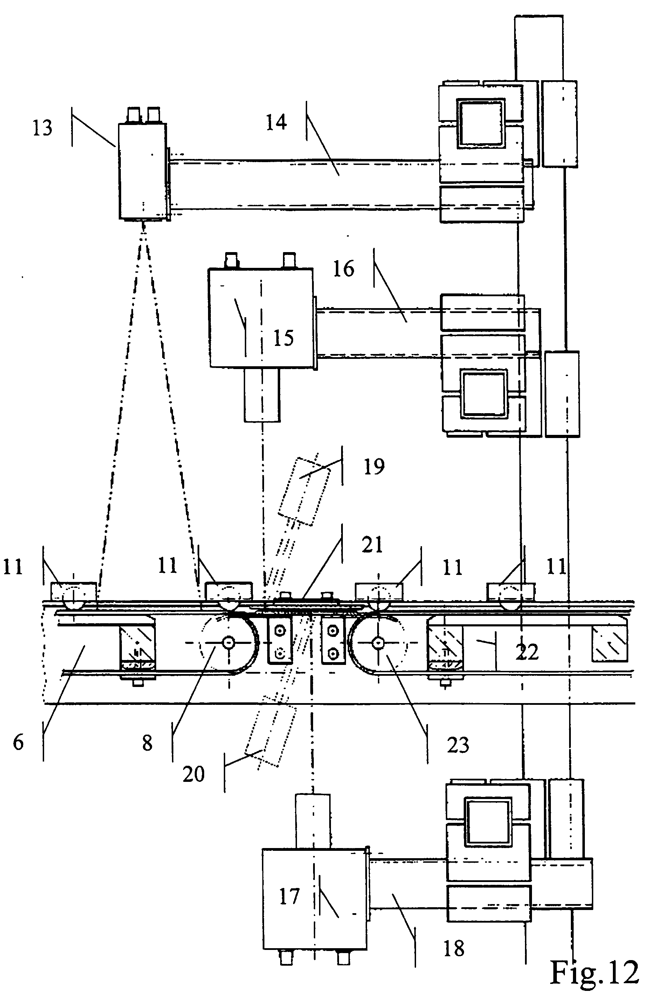

Die erfindungsgemäße Vorrichtung zur Datenerfassung umfaßt eine Einrichtung zur Erfassung von Vorder- und/oder Rückseite der Vorlage, die vorzugsweise im Bereich des Bandsystems in Transportrichtung hinter den vorstehend beschriebenen Einrichtungen zur Kontrolle, Steuerung und Qualitätssicherung, soweit diese vorgesehen sind, angeordnet ist Als die Einrichtung zur Erfassung der Vorlagen werden vorzugsweise eine oder mehrere Digitalkameras 15, 17 eingesetzt. Vorzugsweise ist die Einrichtung so ausgestaltet, daß Vorder- und Rückseite einer Vorlage mit je einer Digitalkamera erfaßt werden können, wie dies in Fig. 12 gezeigt ist.

Wie bereits erwähnt wurde, ist in der bevorzugten Ausführungsform mit den Digitalkameras 15, 17 oberhalb bzw. unterhalb der Vorlagenebene das Bandsystem zum Transport der Vorlagen in zwei Abschnitte geteilt, wobei im dadurch entstehenden Zwischenraum eine Erfassung der Vorlage von beiden Seiten möglich ist. In diesem Zwischenraum sind auch keine Vorlagenandrückeinrichtungen vorgesehen, damit keine Verdeckungsprobleme auftreten und die ganze Vorlagenbreite für die Erfassung genutzt werden kann. Vielmehr befindet sich dort die Vorlagenführungseinrichtung 21, in die die Vorlagen mit Hilfe des ersten Abschnitts 6 des Bandsystems eingeführt werden. Die Vorlagenfürungseinrichtung 21 ist auf der der Kamera zugewandten Seite transparent, auf der anderen Seite jedoch nicht transparent.

In der in den Figuren gezeigten Ausführungsform, in der Vorlagen zunächst von oben und dann von unten erfaßt werden können, besteht die Vorlagenführungseinrichtung 21 aus Glas, wobei vorzugsweise zunächst auf der Unterseite (im Aufnahmebereich der Digitalkamera 15) und dann auf der Oberseite (im Aufnahmebereich der Digitalkamera 17) zusätzlich hinter dem Glas lichtundurchlässige Platten, beispielsweise aus Metall, vorgesehen sind. Durch die beschriebene Anordnung wird ein Durchscheinen der Vorlage vermieden, da auf der von der Kamera abgewandten Seite jeweils eine lichtundurchlässige Platte vorgesehen ist. Mit Hilfe der oberen Lichtquelle 19 und der untere Lichtquelle 20, die jeweils versetzt zur Kammeramittellinie angebracht sind, kann dann für definierte Lichtverhältnisse in den Aufnahmebereichen der Kameras gesorgt. Geeignet als Lichtquellen 19, 20 sind insbesondere hochfrequente (20 kHz) Lichtquellen.

Es ist auch möglich, die vorstehend beschriebene Vorrichtung so abzuwandeln, daß zunächst die Rückseite und dann die Vorderseite erfaßt wird.

Zur Steuerung der Digitalkameras 15, 17 kann ein Sensor vorgesehen sein, der jeweils ein Signal erzeugt, wenn eine Vorlage in den Aufnahmebereich einer Kamera eintritt bzw. diesen wieder verläßt. Dieses Signal kann z.B. auch von dem bereits beschriebenen Sensor S2 stammen.

Prinzipiell ist es möglich. zur Erfassung der mittels des Transportsystems transportierten Vorlagen eine oder mehrere Digitalkameras (CCD-Kameras), die die vorbeilaufenden Vorlagen digitalisieren, einzusetzen. Die Erfassung der fließbandartig an den Kameras vorbeigeführten Vorlagen erfolgt, ohne daß die Transportgeschwindigkeit der erfaßten Vorlage bei der Aufnahme durch die Kamera wesentlich vermindert wird.

Die Zahl der Kameras und die Länge des Transportbandes können variiert werden, um die Leistung des Systems zu optimieren (skalierbares System). So ist es beispielsweise möglich, eine Kamera oberhalb des Transportsystems vorzusehen, um die Vorlagen nacheinander zu erfassen. Es ist auch möglich, zwei, drei oder mehr Kameras oberhalb des Transportsystems vorzusehen, die jeweils so gesteuert werden, daß sie verschiedene Vorlagen erfassen, so daß der Gesamtdurchsatz des Systems erhöht werden kann. Stellt man eine oder mehrere Kameras in dem beschriebenen Gehäuse 1 zur Verfügung, wobei als Transportband, wenn eine Erfassung der unteren Seite der Vorlage vorgesehen ist, jeweils im Aufnahmebereich, wie schon beschrieben wurde, lassen sich damit Vorder- und Rückseite von Vorlagen in einem Durchgang erfassen. Alternativ dazu können auch mehrere Aufnahmen einer Vorlage mit verschiedenen Kameraeinstellungen, z.B. Fokussierungen auf verschiedene Bereiche, gemacht werden. Einzelne Vorlagen können auch dadurch erfaßt werden, daß verschiedene Teile der Vorlage von verschiedenen Kameras erfaßt werden.

In der erfindungsgemäßen Vorrichtung können verschiedene Typen von Digitalkameras, wie CCD-Flächen- oder Zeilenkameras, ggf. auch in Kombination, eingesetzt werden. Grundlagen dieser Technologie werden in Bernd Jähne, Digitale Bildverarbeitung, 4. Auflage, Springer-Verlag, Heidelberg 1997 erläutert

Vorzugsweise wird als Digitalkamera eine CCD-Zeilenkamera (z.B. der Fa. Dalsa, Typ: CL-CB oder CL7) eingesetzt.

Die CCD-Technolgie ermöglicht es eine Vorlage via der Halbleitertechnolgie über eine Analog-/Digitalwandlung in eine für den Computer lesbare Form zu überführen. Abhängig von der gewünschten Auflösung der digitalisierten Bilder können entweder sog. 2K CCD-Zeilenkameras (mit 2048 Pixel) oder 4K CCD-Zeilenkamera (mit 4098 Pixel) eingesetzt werden. Um eine für die Digitalisierung von beschrieben Vorlagen ausreichende Auflösung zu erreichen, sind zur Darstellung eines Millimeters einer Vorlage ca. 15 Pixel z.B. in einer Zeilenkamera ausreichend. Die Pixelgröße der verwendeten Kameras liegt typischerweise zwischen 8 - 12 Micrometer. Im weiteren werden modellhaft Werte bei Verwendung einer 2 K CCD-Kamera angegeben.

Die maximale Aufnahmebreite auf dem Transportsystem beträgt in einer Ausführungsform 250 mm. Dadurch ergibt sich eine Zeilenfrequenz von 4915,2 Hz, unter der Annahme, daß die Geschwindigkeit 600 mm/sec beträgt. Also gilt: 600/250 = 2,4, abgebildet auf 2048 Pixel; 2,4 * 2048 = 4915,2 Hz.
Die Datenrate ergibt sich aus der Anzahl der Pixel * Anzahl der Zeilen/sec. Also gilt: 2048 * 4915 = 10,07 MB/sec. Diese Datenmenge wird über entsprechende Hardwarekarten (FrameGrabber) verarbeitet. Mit Hilfe eines SCSI oder RAID-Systems können diese Datenmengen via einem Fast-Ethernet Netzwerk auf einen Server auf Festplatten übertragen werden. Von dort können sie nach belieben weiterverarbeitet werden.
Bei Verwendung einer 4 K Kamera bekommt man ein besseres Bild der Vorlage, dafür sind die Datenmengen auch erheblich größer. Um mit diesen Datenmengen umzugehen, sind RAID Controller notwendig (z.B. von der Fa. SUN, diese Controller können mittels FDDI-Technologie mit jeweils 80 MB/sec arbeiten). Über den Controller werden die Daten parallel, je nach Ausführungsform, auf mehrere Hochgeschwindigkeitsfestplatten übertragen.
Die anfallenden Datenmengen können durch Wahl der Transportgeschwindigkeit und/oder der optischen Auflösung der Kamera festgelegt werden. Damit ist eine Anpassung an die gegebene Computerhardware möglich.

Zu erwartende kleine Geschwindigkeitsänderungen des Transportsystems (verursacht z.B. durch Strom-/Spannungsschwankungen des Netzes) verursachen in den digitalisierte Bildern der Zeilenkamera Helligkeitsunterschiede, die unerwünschte Grauschwankungen in dem Digitalbildern verursachen.

Dies kann man durch spezielles Triggern der CCD-Kamera vermeiden. Dazu wird der bereits erwähnte inkrementale Drehgeber (z.B. der Fa. Haidenhain), der in das Antriebssystem eingebaut ist, herangezogen. Es erzeugt während einer Umdrehung der Antriebswalze TTL-Impulse. Diese werden für die Steuerung des FrameGrabbers berangezogen, der wiederum die effektiven Aufnahmezeiten für die CCD-Zeilenkamera entsprechend festlegt. Somit wird sichergestellt, daß die Belichtungszeit/ Geschwindigkeit ist für alle digitalisierten Vorlagen immer konstant ist.

Vorlagen, die aus der Führungseinrichtung austreten, gelangen in den Bereich des zweiten Abschnitts 22 des Bandsystems. In diesem Abschnitt 22 des Bandsystems sind vorzugsweise wieder Vorlagenandrückeinrichtungen 11 vorgesehen, wie sie vorstehend bereits beschrieben wurden.

Die erfindungsgemäße Vorrichtung zur Datenerfassung umfaßt ferner eine Einrichtung zur Ablage der erfaßten Vorlagen, die sich am Ende des Bandsystems befindet. Diese Einrichtung umfaßt einen Ablagebehälter 27, der sich in bezug auf das Bandsystem in einer solchen Position befindet, daß an das Ende des Bandsystems kommende Vorlagen in den Ablagebehälter 27 fallen.

In einer bevorzugten Ausführungsform befinden sich Ablagebehälter 27, 27' auf einem Ablagebehältertransportband 28, das senkrecht zum Bandsystem zum Transport der vereinzelten Vorlagen angeordnet ist. Zum Antrieb des Ablagebehältertransportbands 28 kann ein besonderer Elektromotor 29 vorgesehen sein. Mit Hilfe des Ablagebehältertransportbands 28 kann ein Ablagebehälter 27, der eine vorgegebene Menge oder Anzahl an Vorlagen aufgenommen hat, aus dem Ablagebereich entfernt und durch einen leeren Ablagebehälter ersetzt werden.

Mit geeigneten Sensoren kann z.B. festgestellt werden, ob ein Ablagebehälter zum Aufnehmen von erfaßten Vorlagen bereitsteht, ob die maximale Füllhöhe eines Ablagebehälters, der gerade befüllt wird, noch nicht überschritten ist, und ob ein leerer Ablagebehälter als Ersatz bereitsteht. Diese Informationen können von einer geeigneten Elektronik verarbeitet und zur Steuerung der Einrichtung zur Ablage der erfaßten Vorlagen genutzt oder optisch oder akustisch angezeigt werden.

Wenn die Vorrichtung zur Datenerfassung eine Einrichtung zur Erfassung eines Prüf- oder Steuercodes umfaßt, wie sie vorstehend beschrieben wurde, oder ein Prüf- oder Steuercode über die Einrichtung zur Erfassung von Vorder- und/oder Rückseite der Vorlage erfaßt wird, so kann mit Hilfe dieser Einrichtungen erfaßte Steuerinformation genutzt werden, um den Antrieb des Ablagebehältertransportbands 28 zu steuern. Das Ablagebehältertransportband 28 kann dann so bewegt werden, daß rechtzeitig ein neuer Ablagebehälter bereitsteht, wenn ein neuer Job (ein neuer Stoß von Vorlagen, z.B. eine neue Akte) beginnt. Es kann auch vorgesehen werden, daß ein Benutzer derartige Steuerinformationen eingeben kann.

Mit der Erfindung kann eine deutliche Leistungs- und Qualitätssteigerung erzielt werden. Für das Massengeschäft (gute Vorlagenqualität) kann mit der beschriebenen Technik der Durchsatz bis auf ca. 7200 Vorlagen/Stunde (ca. 57 000 Vorlagen/Tag) gesteigert werden. Für schlechte Vorlagenqualität/empfindliche Druckvorlagen kann mit der beschriebenen Technik der Durchsatz ebenfalls Durchsatz bis auf ca. 7200 Vorlagen/Stunde (ca. 57 000 Vorlagen/Tag) gesteigert werden.

Kommt es zu einer Störung des Vorlagentransports, kann dies aufgrund der guten Zugänglichkeit des Transportsystems wesentlich einfacher als bei herkömmlichen Scannern oder Kopierern mit automatischem Einzug behoben werden.

### Bezugszeichenliste

- 1: Gehäuse
- 2: Abdeckung
- 3: Vorlagendepot
- 4: Vorlagenstapel
- 5: Einrichtung zum Abziehen einzelner Vorlagen
- 6: erster Abschnitt des Bandsystems
- 7: vordere Tranportbandwalze des ersten Abschnitts des Bandsystems
- 8: Hintere Tranportbandwalze des ersten Abschnitts des Bandsystems
- 9: Metalldetektor
- 10: Vereinzelungskontrolle
- 11: Vorlagenandrückeinrichtung
- 12: Drucker
- 13: Lesegerät
- 14: Halterung des Lesegeräts
- 15: obere Digitalkamera
- 16: Halterung der oberen Digitalkamera
- 17: untere Digitalkamera
- 18: Halterung der unteren Digitalkamera
- 19: obere Lichtquelle
- 20: untere Lichtquelle
- 21: Vorlagenführungseinrichtung
- 22: zweiter Abschnitt des Bandsystems
- 23: vordere Tranportbandwalze des zweiten Abschnitts des Bandsystems
- 24: hintere Tranportbandwalze des zweiten Abschnitts des Bandsystems
- 25: Elektromotor für den Antrieb des Transportsystems
- 26: Antriebsriemen
- 27: Ablagebehälter
- 28: Ablagebehältertransportband
- 29: Elektromotor für den Antrieb des Ablagebehältertransportbands
- 30: Vorlagendepotboden
- 31: kleinformatige Vorlage
- 32: Vorlagensensor
- 33: Stutzen der Druckluftzfuhr des Seitenwandhohlelements
- 34: Seitenwandhohlelement
- 35: seitliche Druckluftaustrittsöffnung
- 36: Strömungsrichtung der Druckluft
- 37: vordere Vorlagendepotbegrenzung
- 38: Spalt
- 39: Trägerelement
- 40: Stellschraube
- 41: Spitze
- 42: Saugwalze
- 43: Rotationsachse der Saugwalze
- 44: Zylinder
- 45: Öffnung im Zylinder
- 46: Befestigung des Zylinders an der Rotationsachse
- 47: Hohlkörper
- 48: Öffnung im Hohlkörper
- 49: Durchführung
- 50: Anschlußstutzen
- 51: Schlauchschelle
- 52: Lager
- 53: Antriebsrad
- 54: Antriebsriemen
- 55: Blasdüse
- 56: Blasdüsen-Druckluftkanal
- 57: Druckluft-Anschlußstutzen
- 58: obere Saugdüse
- 59: untere Saugdüse
- 60: Vakuumkanal
- 61: Vakuum-Anschlußstutzen
- 62: konkave Fläche
- 63: Blas-Saug-Element
- 64: obere gekrümmte Vorlagenführungsfläche
- 65: untere gekrümmte Vorlagenführungsfläche
- 66: Eingabeöffnung
- 67: Ausgabeöffnung
- 68: Transportband
- 69: Vorlagenandrückkugel
- 70: Aufnahmebuchse
- 71: Halteelemente
- 72: Transportbandabstützung
- 73: oberes Transportband-Führungselement
- 74: unteres Transportband-Führungselement
- 75: Sensorträgerplatte
- 76: Scharnier
- 77: Griff
- 78: Reibrad
- 79: Reibradauflage
- 80: Reibradachse
- 81: Rutschkupplung
- 82: Sensoroberteil (S1)
- 83: Sensorunterteil (S1)
- 84: Sensoroberteil (S2)
- 85: Sensorunterteil (S2)
- 90: Unterdruck-Verbindungsschlauch zwischen Vakuum-Anschlußstutzen und Ventil
- 91: Elektrisches Proportional-Ventil
- 92: Pumpe für Unter- und Überdruck
- 93: Sensor
- 94: Sensor
- 95: Sensorhalteplatte
- 96: Saugeinrichtung
- 97: Öffnung im Saugelement2 mit Stutzen
- 98: Vakuumkanal
- 99: Abstandshalter

## Patentansprüche

1. Vorrichtung zur Datenerfassung, die folgendes umfaßt:
eine Einrichtung, um eine Vorlage von der Unterseite eines Vorlagenstapels (4) abzuziehen, mit
einem Vorlagendepot (3), das einen Vorlagendepotboden (30) und eine in Transportrichtung vordere Vorlagendepotbegrenzung (37) aufweist und den Vorlagenstapel (4) aufnimmt;
einem mit Hilfe der vorderen Vorlagendepotbegrenzung (37) gebildeten Spalt (38), durch den eine zu erfassende Vorlage mit Hilfe
einer Saugwalze (42) transportiert wird, die in bezug auf den Vorlagendepotboden (30) so angeordnet ist, daß eine Vorlage von der Unterseite des Vorlagenstapels (4) ansaugt und durch Rotation der Saugwalze (42) abgezogen werden kann;
eine Einrichtung zum Weiterleiten der mit Hilfe der Saugwalze (42) abgezogenen Vorlage;
ein aus einem oder mehreren Abschnitten (6, 22) bestehendes Transportbandsystem, auf das die Vorlage durch die Einrichtung zum Weiterleiten gelangt und das die auf einem Transportband/Transportbändern (68) liegenden Vorlagen transportiert;
eine Einrichtung zur Erfassung von Vorder- und/oder Rückseite der Vorlage (15, 17), zu der die Vorlage mit Hilfe des Transportbandsystems gebracht wird;
eine Einrichtung zur Ablage der erfaßten Vorlagen.

2. Vorrichtung nach Anspruch 1, die zusätzlich eine Blaseinrichtung, um einen Luftstrom auf die Vorderkante der Vorlage zu richten, wenn diese von der Saugwalze (42) erfaßt wird, und/oder eine Saugeinrichtung, mit der ein Sog auf die Oberseite der von der Saugwalze (42) aufgenommenen Vorlage ausgeübt wird, wobei der durch die Saugeinrichtung auf die Vorlage ausgeübte Sog kleiner ist als der von der Saugwalze (42) ausgeübte Sog, umfaßt.

3. Vorrichtung nach Anspruch 2, bei der eine Blaseinrichtung und eine Saugeinrichtung vorgesehen sind, die als integrales Blas-Saug-Element (63) ausgebildet sind.

4. Vorrichtung nach Anspruch 2 oder 3, wobei die Saugeinrichtung so ausgebildet ist, daß sie Saugdüsen (58, 59) umfaßt, die mit einem Vakuumkanal (60) in Verbindung stehen, der mit einer Vakummquelle verbunden ist, wobei zwischen dem Vakuumkanal (60) und der Vakuumquelle ein Ventil vorgesehen ist, so daß der an die Saugdüsen (58, 59) angelegte Unterdruck gesteuert werden kann.

5. Vorrichtung nach Anspruch 4, wobei die Steuerung des Unterdrucks so erfolgt, daß ein Unterdruck angelegt wird, der ausreicht, um eine Vorlage festzuhalten, wenn ein in Transportrichtung hinter der Saugeinrichtung vorgesehener Sensor (93, 93') eine Vorlage detektiert, und das Anlegen des Unterdrucks, der ausreicht, um eine Vorlage festzuhalten, in Abhängigkeit eines Signals eines in Transportrichtung hinter dem ersten Sensor (93, 93') vorgesehenen zweiten Sensors (94, 94') wieder aufgehoben wird,
(a) wenn der zweite Sensor nach Verstreichen eines festgelegten Zeitinkrements keine Vorlage detektiert oder,
(b) falls der zweite Sensor (94, 94') an dem unter (a) genannten Zeitpunkt eine Vorlage detektiert, wenn ein festgelegtes Zeitinkrement verstrichen ist, nachdem der zweite Sensor (94, 94') keine Vorlage mehr detektiert.

6. Vorrichtung nach einem der vorstehenden Ansprüche, die zusätzlich eine Einrichtung, um am Boden des Vorlagendepots (3) Luftströme auf die Seitenkanten der Vorlagen zu richten, umfaßt, wobei der Boden des Vorlagendepots vorzugsweise einen oder mehrere, senkrecht zur Transportrichtung verlaufende Abstandshalter aufweist.

7. Vorrichtung nach einem der vorstehenden Ansprüche, bei der die Saugwalze (42) einen äußeren, beim Betrieb der Vorrichtung rotierenden Zylinder (44), bei dem Öffnungen (45) über die gesamte Oberfläche des Zylinders (44) verteilt sind, und einen inneren, in dem Zylinder (44) angeordneten, beim Betrieb in bezug auf die Vorrichtung fixierten, mit Öffnungen (48) versehenen Hohlkörper (47) umfaßt, dessen Öffnungen (48) nur in einem bestimmten Bereich der Oberfläche angeordnet sind, so daß sie sich in einem Streifen befinden, der von Parallelen zur Rotationsachse (43) der Saugwalze (42) begrenzt wird, wobei eine Saugpumpe mit dem Inneren des Hohlkörpers (47) verbunden so daß die Öffnungen (45) in einem bestimmten Bereich des äußeren Zylinders (44), der durch die Einstellung der Rotationsposition des inneren Hohlkörpers (47) in bezug auf die Vorrichtung festgelegt wird und in dem Öffnungen (48) im inneren Hohlkörper (47) Öffnungen (45) im äußeren Zylinder (44) entsprechen, mit Unterdruck beaufschlagt werden.

8. Vorrichtung nach einem der vorstehenden Ansprüche, wobei oberhalb des Transportbandes Vorlagenandrückeinrichtungen (11) vorgesehen sind, die vorzugsweise von Vorlagenandrückkugeln (69), die sich in runden Aufnahmebuchsen (70) befinden, gebildet werden, wobei der Durchmesser der Vorlagenandrückkugeln (69) etwas kleiner ist als der der Aufnahmebuchsen (70), so daß die Vorlagenandrückkügeln (69) nach unten kappenförmig aus den Aufnahmebuchsen (70) ragen und sich in diesen Aufnahmebuchsen (70) drehen können,.

9. Vorrichtung nach einem der vorstehenden Ansprüche, die im Bereich des Transportbandsystems, vorzugsweise vor der Einrichtung zur Erfassung der Vorlage, zusätzlich eine oder mehrere der folgenden Einrichtungen aufweist:
eine Einrichtung zum Prüfen auf Metall;
eine Einrichtung zum Erkennen nicht vereinzelter Vorlagen, die vorzugsweise ein oder mehrere Reibräder (78) umfaßt, die durch Reibwirkung eine mit den Reibrädern (78) in Kontakt tretende Vorlage gegenüber einer auf dem Transportband (68) unmittelbar aufliegenden Vorlage in Transportrichtung verschieben;
eine Einrichtung, um die Vorlage mit einem Prüfcode zu versehen;
eine Einrichtung, um einen auf der Vorlage angebrachten Prüf- oder Steuercode zu erfassen.

10. Verfahren zur Datenerfassung mit Hilfe einer Vorrichtung nach einem der Ansprüche 1 bis 9, bei dem eine oder mehrere Vorlagen in das Vorlagendepot (3) eingelegt und dann von der Vorrichtung transportiert, erfaßt und abgelegt werden.
